(19) Europäisches Patentamt / European Patent Office / Office européen des brevets

(11) **EP 4 287 739 A1**

(12) **EUROPEAN PATENT APPLICATION**
published in accordance with Art. 153(4) EPC

(43) Date of publication:
**06.12.2023 Bulletin 2023/49**

(21) Application number: **22746253.8**

(22) Date of filing: **27.01.2022**

(51) International Patent Classification (IPC):
*H04W 72/04* (2023.01)      *H04W 72/14* (2009.01)
*H04W 72/02* (2009.01)      *H04L 5/00* (2006.01)
*H04L 1/18* (2023.01)

(52) Cooperative Patent Classification (CPC):
**H04L 1/18; H04L 5/00; H04W 72/02; H04W 72/04;
H04W 72/23**

(86) International application number:
**PCT/KR2022/001488**

(87) International publication number:
**WO 2022/164227 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.01.2021 US 202163142412 P**

(71) Applicant: **LG Electronics Inc.
Yeongdeungpo-gu
Seoul 07336 (KR)**

(72) Inventors:
• **LEE, Youngdae
Seoul 06772 (KR)**
• **LEE, Seungmin
Seoul 06772 (KR)**
• **HONG, Jongwoo
Seoul 06772 (KR)**

(74) Representative: **Plasseraud IP
66, rue de la Chaussée d'Antin
75440 Paris Cedex 09 (FR)**

(54) **METHOD AND DEVICE FOR TRANSMITTING/RECEIVING SIGNAL IN WIRELESS
COMMUNICATION SYSTEM**

(57)    A terminal according to an embodiment of the present disclosure may: receive, from a base station, configuration information of a resource pool for sidelink transmission; and transmit a transport block (TB) for a sidelink grant to a second terminal on the basis of the configuration information.

FIG. 7

EP 4 287 739 A1

**Description**

[Technical Field]

The present disclosure relates to a wireless communication system, and more particularly, to a method and device for transmitting or receiving uplink/downlink wireless signals in a wireless communication system.

[Background Art]

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

[Disclosure]

[Technical Problem]

An object of the present disclosure is to provide a method of efficiently performing wireless signal transmission/reception procedures and an apparatus therefor.
It will be appreciated by persons skilled in the art that the objects and advantages that could be achieved with the present disclosure are not limited to what has been particularly described hereinabove and the above and other objects and advantages that the present disclosure could achieve will be more clearly understood from the following detailed description.

[Technical Solution]

In one aspect of the present disclosure, a method for transmitting a signal by a first terminal in a wireless communication system include receiving configuration information about resource pools for sidelink transmission from a base station, and transmitting, based on the configuration information, a transport block (TB) for a sidelink grant to a second terminal.
The resource pools may include a first resource pool with a physical sidelink feedback channel (PSFCH) configured for hybrid automatic repeat and request (HARQ) feedback or a second resource pool without the PSFCH configured,
The TB may be generated based on whether the HARQ feedback is enabled.
The method may further include selecting a sidelink grant for transmission of the TB from the resource pool.
The TB may be transmitted on a resource of the selected sidelink grant.
Based on that the PSFCH is configured for the resource of the selected sidelink grant and that the TB has the HARQ feedback enabled, a minimum time gap may be set between two consecutive transmissions of the TB.
The TB may contain sidelink data of a logical channel having the HARQ feedback enabled.
When the PSFCH is not configured for the resource of the selected sidelink grant, or when the minimum time gap is not achievable, the TB may contain sidelink data of a logical channel having the HARQ feedback disabled.
The minimum time gap Z may be a sum of a and b, wherein the a may be a time gap between an end of a last symbol of a PSFCH transmission of a first resource and a start of a first symbol of a corresponding PSFCH reception, determined based on parameters related to the resource pool, and the b may be a time required for the PSFCH reception and processing plus preparation for a sidelink retransmission including a time for multiplexing and transmission/reception switching of a required physical channel.
The method, may further include monitoring the PSFCH based on the TB having the HARQ feedback enabled, and receiving feedback on the TB from the second terminal.
The method may further include retransmitting the TB based on the feedback being HARQ not-acknowledgement (NACK), and generating a new TB for the sidelink grant based on the feedback being HARQ acknowledgment (ACK).
In another aspect of the present disclosure, a processor-readable recording medium having recorded thereon a program for performing the above-described signal transmission method may be provided.
In another aspect of the present disclosure, a terminal for performing the above-described signal transmission method may be provided.

In another aspect of the present disclosure, a device for controlling a terminal for performing the above-described signal transmission method may be provided.

In another aspect of the present disclosure, a method for receiving a signal by a second terminal in a wireless communication system may include receiving, from a first terminal, a transport block (TB) for a sidelink grant based on configuration information.

The configuration information may include a resource pool for sidelink transmission configured by a base station,

The resource pool may include a first resource pool with a physical sidelink feedback channel (PSFCH) configured for hybrid automatic repeat and request (HARQ) feedback or a second resource pool without the PSFCH configured, and the TB may be generated based on whether the HARQ feedback is enabled.

In another aspect of the present disclosure, a second terminal for performing the above-described signal transmission method may be provided.

[Advantageous Effects]

According to the present disclosure, wireless signal transmission and reception may be effectively performed in a wireless communication system.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

[Description of Drawings]

The accompanying drawings, which are included to provide a further understanding of the invention and are incorporated in and constitute a part of this application, illustrate embodiment(s) of the present disclosure and together with the description serve to explain the principle of the present disclosure. In the drawings:

FIG. 1 illustrates physical channels used in a 3rd generation partnership project (3GPP) system, which is an example of wireless communication systems, and a general signal transmission method using the same;
FIG. 2 illustrates a radio frame structure;
FIG. 3 illustrates a resource grid of a slot;
FIG. 4 illustrates exemplary mapping of physical channels in a slot;
FIG. 5 illustrates the SSB transmission structure;
FIG. 6 illustrates an example of a RACH procedure;
FIG. 7 illustrates an example of a sidelink retransmission method according to the present disclosure;
FIG. 8 is a diagram illustrating a method of transmitting and receiving signals by a UE according to an embodiment of the present disclosure;
FIGS. 9 to 12 show a communication system and a wireless device applicable to the present disclosure; and
FIG. 13 is a diagram illustrating a Discontinuous Reception (DRX) operation of a LTE according to an embodiment of the present disclosure.

[Best Mode]

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto.

In the present disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (LTE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the LTE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent disclosure or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

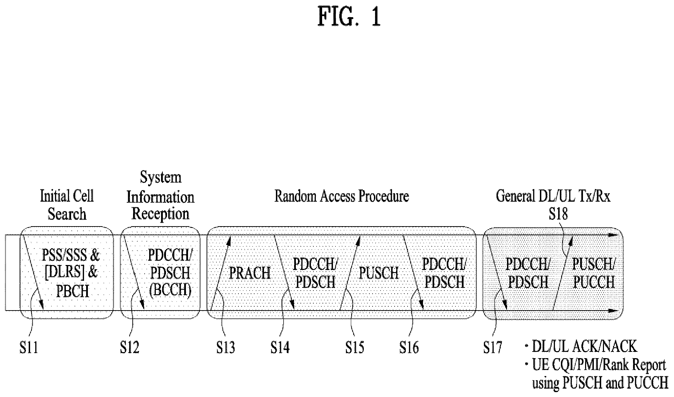

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the LTE may acquire more specific system information by receiving a physical downlink control channel (PDCCH) and receiving a physical downlink shared channel (PDSCH) based on information of the PDCCH in step S102.

The LTE may perform a random access procedure to access the BS in steps S103 to S106. For random access, the LTE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

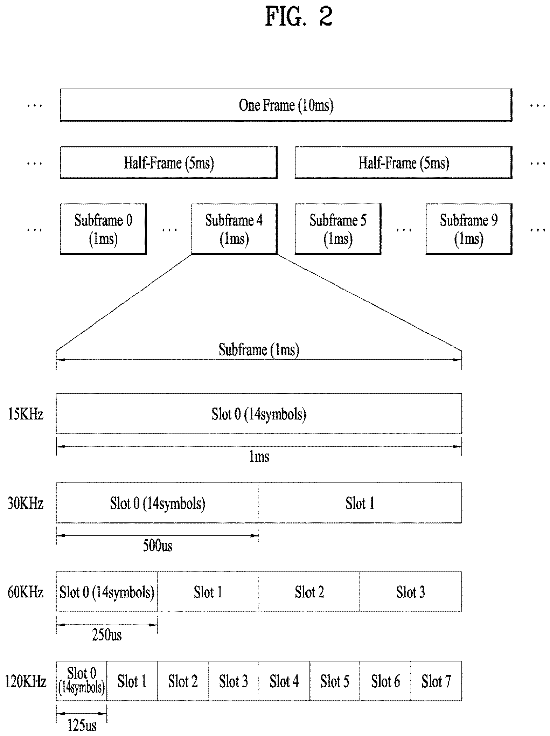

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS (15*2^u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

* $N^{slot}_{symb}$: Number of symbols in a slot
* $N^{frame,u}_{slot}$: Number of slots in a frame
* $N^{subframe,u}_{slot}$: Number of slots in a subframe

Table 2 illustrates that the number of symbols per slot, the number of slots per frame, and the number of slots per subframe vary according to the SCS when the extended CP is used.

[Table 2]

| SCS (15*2^u) | $N^{slot}_{symb}$ | $N^{Frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary. In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

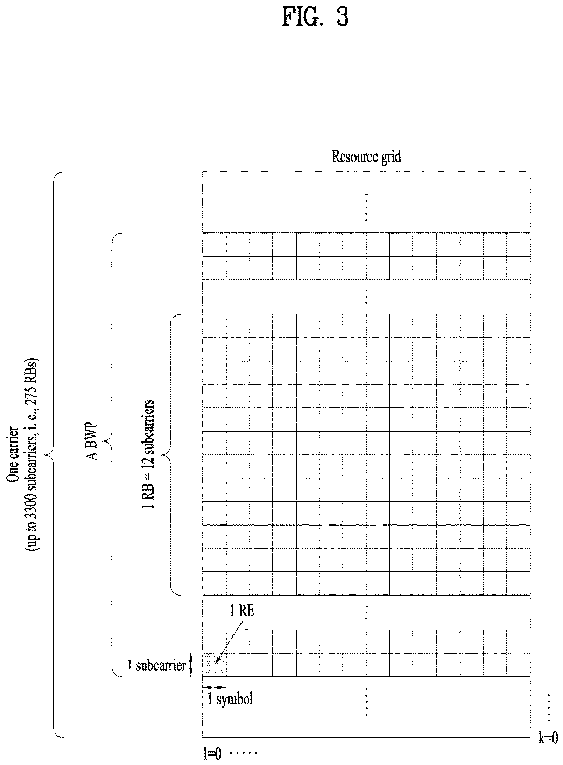

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

**Bandwidth part, BWP**

In the NR system, up to 400MHz per carrier may be supported. When a UE operating in such a wideband carrier always operates with a radio frequency (RF) module for the entire carrier turned on, battery consumption of the UE may increase. Alternatively, considering various use cases (e.g., eMBB, URLLC, mMTC, and so on) operating within a single wideband carrier, a different numerology (e.g., SCS) may be supported for each frequency band within the carrier. Alternatively, each UE may have a different maximum bandwidth capability. In this regard, the BS may indicate to the LTE to operate only in a partial bandwidth instead of the total bandwidth of the wideband carrier. The partial bandwidth may be defined as a BWP. A BWP is a subset of contiguous common RBs defined for numerology ui in BWP i on the carrier, and one numerology (e.g., SCS, CP length, or slot or mini-slot duration) may be configured for the BWP.

The BS may configure one or more BWPs in one carrier configured for the UE. Alternatively, when UEs are concentrated on a specific BWP, the BS may configure another BWP for some of the UEs, for load balancing. Alternatively, the BS may exclude some spectrum of the total bandwidth and configure both-side BWPs of the cell in the same slot in consideration of frequency-domain inter-cell interference cancellation between neighboring cells. That is, the BS may configure at least one DL/LTL BWP for a UE associated with the wideband carrier, activate at least one of DL/UL BWP(s) configured at a specific time point (by L1 signaling being a physical-layer control signal, a MAC control element (CE) being a MAC-layer control signal, or RRC signaling), or set a timer value and switch the LTE to a predetermined DL/LTL BWP, upon expiration of the timer. To indicate switching to another configured DL/UL BWP, DCI format 1_1 or DCI format 0_1 may be used. The activated DL/LTL BWP may be referred to as an active DL/UL BWP. During initial access or before an RRC connection setup, the UE may not receive a configuration for a DL/UL BWP from the BS. A DL/LTL BWP that the UE assumes in this situation is defined as an initial active DL/LTL BWP.

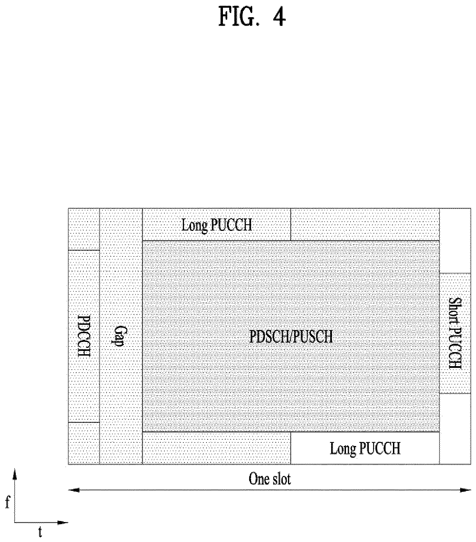

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a LTE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (LTL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured by higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.

- controlResourceSetId: A CORESET related to an SS.
- monitoringSlotPeriodicityAndOffset: A PDCCH monitoring periodicity (in slots) and a PDCCH monitoring offset (in slots).
- monitoringSymbolsWithinSlot: PDCCH monitoring symbols in a slot (e.g., the first symbol(s) of a CORESET).
- nrofCandidates: The number of PDCCH candidates (one of 0, 1, 2, 3, 4, 5, 6, and 8) for each AL={1, 2, 4, 8, 16}.

  * An occasion (e.g., time/frequency resources) in which the LTE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type 1-PDCCH | Common | RA-RNTI or TC-RNTI on a primary cell | Msg2, Msg4 decoding in RACH |

(continued)

| Type | Search Space | RNTI | Use Case |
|---|---|---|---|
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 1_2 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a LTE, and DCI format 2_1 is used to deliver DL pre-emption information to a LTE. DCI format 2_0 and/or DCI format 2_1 may be delivered to a corresponding group of UEs on a group common PDCCH which is a PDCCH directed to a group of LTEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a LTE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

- SR(Scheduling Request): Information used to request UL-SCH resources.
- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.

- CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

[Table 5]

| PUCCH format | Length in OFDM symbols $N_{symb}^{PUCCH}$ | Number of bits | Usage | Etc |
|---|---|---|---|---|
| 0 | 1 - 2 | $\leq 2$ | HARQ, SR | Sequence selection |
| 1 | 4 - 14 | $\leq 2$ | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the LTE transmits the PUCCH of PUCCH format 0 in PUCCH resources for a corresponding SR configuration. PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)). PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

The PUSCH delivers LTL data (e.g., UL-shared channel transport block (LTL-SCH TB)) and/or UCI based on a CP-OFDM waveform or a DFT-s-OFDM waveform. When the PUSCH is transmitted in the DFT-s-OFDM waveform, the LTE transmits the PUSCH by transform precoding. For example, when transform precoding is impossible (e.g., disabled), the UE may transmit the PUSCH in the CP-OFDM waveform, while when transform precoding is possible (e.g., enabled), the LTE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

**SSB (Synchronization Signal Block) transmission and related operations**

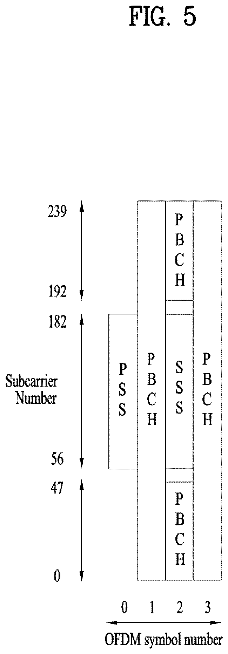

FIG. 5 is a diagram illustrating a synchronization signal block (SSB) structure. A UE may perform cell search, system information acquisition, beam alignment for initial access, DL measurement, and so on based on an SSB. The term SSB is interchangeably used with SS/PBCH block.

Referring to FIG. 5, an SSB includes a PSS, an SSS, and a PBCH. The SSB includes four consecutive OFDM symbols, which carry the PSS, PBCH, SSS/PBCH, and PBCH, respectively. Each of the PSS and the SSS includes one OFDM symbol by 127 subcarriers, and the PBCH includes three OFDM symbols by 576 subcarriers. Polar coding and quadrature phase shift keying (QPSK) are applied to the PBCH. The PBCH includes data REs and DMRS REs in each OFDM symbol. There are three DMRS REs per RB, with three data REs between every two adjacent DMRS REs.

### Cell Search

Cell search is a process of acquiring time/frequency synchronization with a cell and detecting the cell ID (e.g., physical layer cell ID (PCID)) of the cell at a UE. The PSS is used to detect a cell ID in a cell ID group, and the SSS is used to detect the cell ID group. The PBCH is used to detect an SSB (time) index and a half-frame.

The cell search procedure of the LTE may be summarized in Table 6 below.

[Table 6]

| | Type of Signals | Operations |
|---|---|---|
| 1st step | PSS | SS/PBCH block (SSB) symbol timing acquisition Cell ID detection within a cell ID group (3 hypothesis) |
| 2nd Step | SSS | Cell ID group detection (336 hypothesis) |
| 3rd Step | PBCH DMRS | SSB index and Half frame (HF) index (Slot and frame boundary detection) |
| 4th Step | PBCH | Time information (80 ms, System Frame Number (SFN), SSB index, HF) Remaining Minimum System Information (RMSI) Control resource set (CORESET)/Search space configuration |
| 5th Step | PDCCH and PDSCH | Cell access information RACH configuration |

There are 336 cell ID groups, and there are 3 cell IDs for each cell ID group. There are a total of 1008 cell IDs. Information on the cell ID group to which the cell ID of the cell belongs is provided/obtained through the SSS of the cell, and information on the cell ID among 336 cells in the cell ID is provided/obtained through the PSS.

### System Information Acquisition

SI is divided into a master information block (MIB) and a plurality of system information blocks (SIBs). The MIB and the plurality of SIBs are further divided into minimum SI and other SI. The minimum SI may include the MIB and systemInformationBlock1 (SIB 1), carrying basic information required for initial access and information required to acquire the other SI. SIB1 may also be referred to as remaining minimum system information (RMSI). For details, the following may be referred to.

- The MIB includes information/parameters related to reception of SIB1 and is transmitted on the PBCH of an SSB. The UE assumes that a half-frame including an SSB is repeated every 20ms during initial cell selection. The UE may determine from the MIB whether there is any control resource set (CORESET) for a TypeO-PDCCH common search space. The TypeO-PDCCH common search space is a kind of PDCCH search space and used to transmit a PDCCH that schedules an SI message. In the presence of a TypeO-PDCCH common search space, the UE may determine (1) a plurality of contiguous RBs and one or more consecutive symbols included in a CORESET, and (ii) a PDCCH occasion (e.g., a time-domain position at which a PDCCH is to be received), based on information (e.g., pdcch-ConfigSIB1) included in the MIB. In the absence of a TypeO-PDCCH common search space, pdcch-ConfigSIB1 provides information about a frequency position at which the SSB/SIB 1 exists and information about a frequency range without any SSB/SIB1.
- SIB1 includes information related to availability and scheduling (e.g., a transmission periodicity and an SI-window size) of the remaining SIBs (hereinafter, referred to as SIBx where x is an integer equal to or larger than 2). For example, SIB1 may indicate whether SIBx is broadcast periodically or in an on-demand manner upon UE request. If SIBx is provided in the on-demand manner, SIB1 may include information required for the LTE to transmit an SI request. A PDCCH that schedules SIB1 is transmitted in the TypeO-PDCCH common search space, and SIB1 is transmitted on a PDSCH indicated by the PDCCH.

- SIBx is included in an SI message and transmitted on a PDSCH. Each SI message is transmitted within a periodic time window (i.e., SI-window).

**Random Access Procedure**

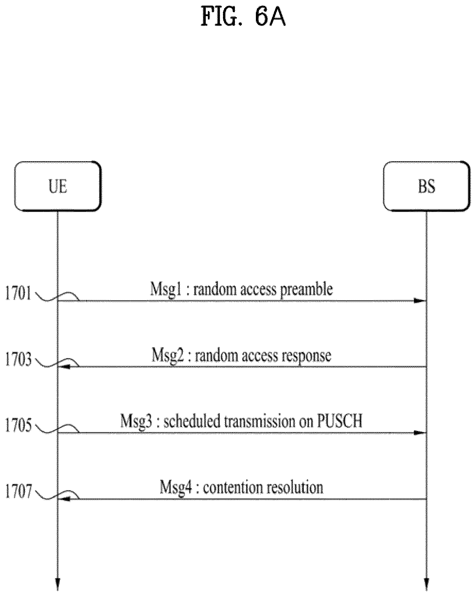

The random access procedure of the UE can be summarized as shown in Table 7 and FIG. 6A.

[Table 7]

|  |  | Type of Signals | Operations/Information obtained |
|---|---|---|---|
| 1st step | | PRACH preamble in UL | * Initial beam obtainment<br>* Random selection of RA-preamble ID |
| 2nd step | | Random Access Response on DL-SCH | * Timing Advanced information<br>* RA-preamble ID |
| 3rd step | | UL transmission on UL-SCH | * Initial UL grant. Temporary C-RNTI<br>* RRC connection request<br>* UE identifier |
| 4th step | | Contention Resolution on DL | * Temporary C-RNTI on PDCCH for initial access<br>* C-RNTI on PDCCH for UE in RRC CONNECTED |

The random access procedure is used for a variety of purposes. For example, the random access procedure may be used for network initial access, handover, and UE-triggered UL data transmission. The UE may acquire UL synchronization and UL transmission resources through a random access procedure. The random access procedure is divided into a contention-based random access procedure and a contention free random access procedure.

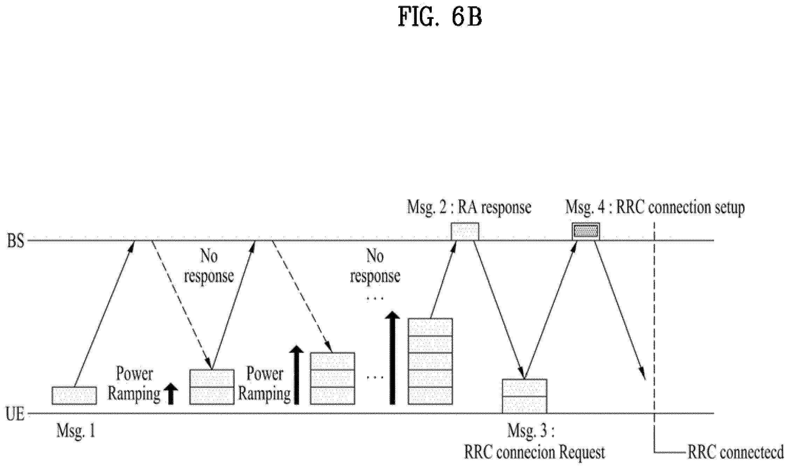

FIG. 6A and 6B show an example of a random access procedure, in particular a contention-based random access procedure.

First, the UE may transmit the random access preamble as Msg1 of the random access procedure in the LTL through the PRACH (e.g., refer to 1701 of FIG. 6A).

Random access preamble sequences of two different lengths are supported. The length 839 of the longer sequence is applied to the SCSs of 1.25 kHz and 5 kHz, whereas the length 139 of the shorter sequence is applied to the SCSs of 15 kHz, 30 kHz, 60 kHz, and 120 kHz.

Multiple preamble formats are defined by one or more RACH OFDM symbols and different CPs (and/or guard times). An RACH configuration for a cell is provided in system information of the cell to the LTE. The RACH configuration includes information about a PRACH SCS, available preambles, and a preamble format. The RACH configuration includes information about associations between SSBs and RACH (time-frequency) resources. The UE transmits an RACH preamble in RACH time-frequency resources associated with a detected or selected SSB.

An SSB threshold for RACH resource association may be configured by the network, and an RACH preamble is transmitted or retransmitted based on an SSB having a reference signal received power (RSRP) measurement satisfying the threshold. For example, the UE may select one of SSBs satisfying the threshold, and transmit or retransmit an RACH preamble in RACH resources associated with the selected SSB.

Upon receipt of the RACH preamble from the UE, the BS transmits an RAR message (Msg 2) to the UE. A PDCCH that schedules a PDSCH carrying the RAR is cyclic redundancy check (CRC)-masked by a random access radio network temporary identifier (RA-RNTI) and transmitted. Upon detection of the PDCCH masked by the RA-RNTI, the UE may receive an RAR on a PDSCH scheduled by DCI carried on the PDCCH. The UE determines whether the RAR includes RAR information for its transmitted preamble, that is, Msg 1. The UE may make the determination by checking the presence or absence of the RACH preamble ID of its transmitted preamble in the RAR. In the absence of the response to Msg 1, the UE may retransmit the RACH preamble a predetermined number of or fewer times, while performing power ramping. The LTE calculates PRACH transmission power for a preamble retransmission based on the latest path loss and a power ramping counter.

The RAR information may include the preamble sequence transmitted by the UE, a cell RNTI (C-RNTI) that the BS has allocated to the UE attempting random access, UL transmit time alignment information, LTL transmission power adjustment information, and LTL radio resource allocation information. Upon receipt of its RAR information on the PDSCH, the UE may acquire time advance information for UL synchronization, an initial UL grant, and a temporary C-RNTI. The timing advance information is used to control a LTL signal transmission timing. To align a PUSCH and/or PUCCH transmission of the UE with a subframe timing of a network end, the network (e.g., the BS) may measure the time difference between PUSCH, PUCCH, or SRS reception and a subframe and transmit the timing advance information based on the time difference. The LTE may transmit a LTL signal as Msg 3 of the RACH procedure on a UL-SCH based on the RAR information. Msg 3 may include an RRC connection request and a UE ID. The network may transmit Msg 4 in response to Msg 3. Msg 4 may be handled as a contention resolution message on DL. As the UE receives Msg 4, the UE may enter the RRC_CONNECTED state.

The contention-free RACH procedure may be used for handover of the UE to another cell or BS or may be performed when requested by a BS command. The contention-free RACH procedure is basically similar to the contention-based RACH procedure. However, compared to the contention-based RACH procedure in which a preamble to be used is randomly selected from among a plurality of RACH preambles, a preamble to be used by the LTE (referred to as a dedicated RACH preamble) is assigned to the UE by the BS in the contention-free RACH procedure. Information about the dedicated RACH preamble may be included in an RRC message (e.g., a handover command) or provided to the UE by a PDCCH order. When the RACH procedure starts, the UE transmits the dedicated RACH preamble to the BS. When the UE receives an RAR from the BS, the RACH procedure is completed.

As described before, the UL grant included in the RAR schedules a PUSCH transmission for the UE. A PUSCH carrying an initial UL transmission based on the UL grant of the RAR is referred to as an Msg 3 PUSCH. The contents of the RAR LTL grant start from the MSB and ends in the LSB, given as Table 8.

[Table 8]

| RAR UL grant field | Number of bits |
|---|---|
| Frequency hopping flag | 1 |
| Msg3 PUSCH frequency resource at location | 12 |
| Msg3 PUSCH time resource allocat ion | 4 |
| Modulation and coding scheme (MCS) | 4 |
| Transmit power control (TPC) for Msg3 PUSCH | 3 |
| CSI request | 1 |

The transmit power control (TPC) command is used to determine the transmission power of the Msg 3 PUSCH. For example, the TPC command is interpreted according to Table 9.

[Table 9]

| TPC command | value [dB] |
|---|---|
| 0 | -6 |
| 1 | -4 |
| 2 | -2 |
| 3 | 0 |
| 4 | 2 |
| 5 | 4 |
| 6 | 6 |
| 7 | 8 |

In the contention-free random access procedure, the CSI request field in the RAR UL grant indicates whether the LTE includes the aperiodic CSI report in the corresponding PUSCH transmission. The subcarrier interval for Msg3 PUSCH transmission is provided by the RRC parameter. The UE will transmit the PRACH and the Msg3 PUSCH on the same uplink carrier of the same serving cell. UL BWP for Msg3 PUSCH transmission is indicated by SIB 1 (SystemInformationBlock1).

Among the terms and technologies used in the present disclosure, terms and technologies not specifically described may refer to wireless communication standard documents published prior to the present disclosure. For example, you can refer to the following document.

3GPPLTE

- 3GPP TS 36.211: Physical channels and modulation
- 3GPP TS 36.212: Multiplexing and channel coding
- 3GPP TS 36.213: Physical layer procedures
- 3GPP TS 36.214: Physical layer; Measurements
- 3GPP TS 36.300: Overall description
- 3GPP TS 36.304: User Equipment (UE) procedures in idle mode
- 3GPP TS 36.314: Layer 2 - Measurements
- 3GPP TS 36.321: Medium Access Control (MAC) protocol
- 3GPP TS 36.322: Radio Link Control (RLC) protocol
- 3GPP TS 36.323: Packet Data Convergence Protocol (PDCP)
- 3GPP TS 36.331: Radio Resource Control (RRC) protocol

3GPP NR

- 3GPP TS 38.211: Physical channels and modulation
- 3GPP TS 38.212: Multiplexing and channel coding
- 3GPP TS 38.213: Physical layer procedures for control
- 3GPP TS 38.214: Physical layer procedures for data
- 3GPP TS 38.215: Physical layer measurements
- 3GPP TS 38.300: Overall description
- 3GPP TS 38.304: User Equipment (UE) procedures in idle mode and in RRC inactive state
- 3GPP TS 38.321: Medium Access Control (MAC) protocol
- 3GPP TS 38.322: Radio Link Control (RLC) protocol
- 3GPP TS 38.323: Packet Data Convergence Protocol (PDCP)
- 3GPP TS 38.331: Radio Resource Control (RRC) protocol
- 3GPP TS 37.324: Service Data Adaptation Protocol (SDAP)
- 3GPP TS 37.340: Multi-connectivity; Overall description

Referring to the standard document, some procedures and technical specifications related to the present disclosure are shown in Table 10.

[Table 10]

3.1        Definitions

For the purposes of the present document, the terms and definitions given in TR  21.905  [1] and the following apply. A term defined in the present document takes precedence over the definition of the same term, if any, in TR  21.905  [1].

**Dormant BWP:** The dormant BWP is one of downlink BWPs configured by the network via dedicated RRC signaling. In the dormant BWP, the UE stop monitoring PDCCH on/for the SCell, but continues performing CSI measurements, Automatic Gain Control (AGC) and beam management, if configured.

**DRX group:** A group of Serving Cells that is configured by RRC and that have the same DRX Active Time.

**HARQ information:** HARQ information for DL-SCH, for UL-SCH, or for SL-SCH transmissions consists of New Data Indicator (NDI), Transport Block size (TBS), Redundancy Version (RV), and HARQ process ID.

**IAB-donor:** gNB that provides network access to UEs via a network of backhaul and access links.

**IAB-node:** RAN node that supports NR access links to UEs and NR backhaul links to parent nodes and child nodes.

**Listen Before Talk**: A procedure according to which transmissions are not performed if the channel is identified as being occupied, see TS 37.213 [18].

**Msg3**: Message transmitted on UL-SCH containing a C-RNTI MAC CE or CCCH SDU, submitted from upper layer and associated with the UE Contention Resolution Identity, as part of a Random Access procedure.

**NR backhaul link:** NR link used for backhauling between an IAB-node and an IAB-donor, and between IAB-nodes in case of a multi-hop backhauling.

**NR sidelink communication**: AS functionality enabling at least V2X Communication as defined in TS 23.287 [19], between two or more nearby UEs, using NR technology but not traversing any network node.

**PDCCH occasion**: A time duration (i.e. one or a consecutive number of symbols) during which the MAC entity is configured to monitor the PDCCH.

**Serving Cell:** A PCell, a PSCell, or an SCell in TS 38.331 [5].

**Sidelink transmission information:** Sidelink transmission information included in a SCI for a SL-SCH transmission as specified in clause 8.3 and 8.4 of TS 38.212 [9] consists of Sidelink HARQ information including NDI, RV, Sidelink process ID, HARQ feedback enabled/disabled indicator, Sidelink identification information including cast type indicator, Source Layer-1 ID and Destination Layer-1 ID, and Sidelink other information including CSI request, a priority, a communication range requirement and Zone ID.

**Special Cell:** For Dual Connectivity operation the term Special Cell refers to the PCell of the MCG or the PSCell of the SCG depending on if the MAC entity is associated to the MCG or the SCG, respectively. Otherwise the term Special Cell refers to the PCell. A Special Cell supports PUCCH transmission and contention-based Random Access, and is always activated.

**Timing Advance Group:** A group of Serving Cells that is configured by RRC and that, for the cells with a UL configured, using the same timing reference cell and the same Timing Advance value. A Timing Advance Group containing the SpCell of a MAC entity is referred to as Primary Timing Advance Group (PTAG), whereas the term Secondary Timing Advance Group (STAG) refers to other TAGs.

**V2X sidelink communication**: AS functionality enabling V2X Communication as defined in TS 23.285 [20], between nearby UEs, using E-UTRA technology but not traversing any network node.

NOTE:        A timer is running once it is started, until it is stopped or until it expires; otherwise it is not running. A timer can be started if it is not running or restarted if it is running. A Timer is always started or restarted from its initial value. The duration of a timer is not updated until it is stopped or expires (e.g. due to BWP switching). When the MAC entity applies zero value for a timer, the timer shall be started and immediately expire unless explicitly stated otherwise.

3.2        Abbreviations

For the purposes of the present document, the abbreviations given in TR  21.905  [1] and the following apply. An abbreviation defined in the present document takes precedence over the definition of the same abbreviation, if any, in TR  21.905  [1].

| AP | Aperiodic |
|---|---|
| BFR | Beam Failure Recovery |
| BSR | Buffer Status Report |
| BWP | Bandwidth Part |
| CE | Control Element |
| CG | Cell Group |

| | |
|---|---|
| CI-RNTI | Cancellation Indication RNTI |
| CSI | Channel State Information |
| CSI-IM | CSI Interference Measurement |
| CSI-RS | CSI Reference Signal |
| CS-RNTI | Configured Scheduling RNTI |
| DAPS | Dual Active Protocol Stack |

| | |
|---|---|
| DCP | DCI with CRC scrambled by PS-RNTI |
| DL-PRS | DownLink-Positioning Reference Signal |
| IAB | Integrated Access and Backhaul |
| INT-RNTI | Interruption RNTI |
| LBT | Listen Before Talk |
| LCG | Logical Channel Group |
| LCP | Logical Channel Prioritization |
| MCG | Master Cell Group |
| MPE | Maximum Permissible Exposure |
| NUL | Normal Uplink |
| NZP CSI-RS | Non-Zero Power CSI-RS |
| PDB | Packet Delay Budget |
| PHR | Power Headroom Report |
| PS-RNTI | Power Saving RNTI |
| PTAG | Primary Timing Advance Group |
| QCL | Quasi-colocation |
| RS | Reference Signal |
| SCG | Secondary Cell Group |
| SFI-RNTI | Slot Format Indication RNTI |
| SI | System Information |
| SL-RNTI | Sidelink RNTI |
| SLCS-RNTI | Sidelink Configured Scheduling RNTI |
| SpCell | Special Cell |
| SP | Semi-Persistent |
| SP-CSI-RNTI | Semi-Persistent CSI RNTI |
| SPS | Semi-Persistent Scheduling |
| SR | Scheduling Request |
| SS | Synchronization Signals |
| SSB | Synchronization Signal Block |
| STAG | Secondary Timing Advance Group |

| SUL | Supplementary Uplink |
| TAG | Timing Advance Group |
| TCI | Transmission Configuration Indicator |
| TPC-SRS-RNTI | Transmit Power Control-Sounding Reference Symbols-RNTI |
| UCI | Uplink Control Information |
| V2X | Vehicle-to-Everything |
| ZP CSI-RS | Zero Power CSI-RS |

5.22.1        SL-SCH Data transmission

5.22.1.1        SL Grant reception and SCI transmission

Sidelink grant is received dynamically on the PDCCH, configured semi-persistently by RRC or autonomously selected by the MAC entity. The MAC entity shall have a sidelink grant on an active SL BWP to determine a set of PSCCH duration(s) in which transmission of SCI occurs and a set of PSSCH duration(s) in which transmission of SL-SCH associated with the SCI occurs. A sidelink grant addressed to SLCS-RNTI with NDI = 1 is considered as a dynamic sidelink grant.

If the MAC entity has been configured with Sidelink resource allocation mode 1 as indicated in TS 38.331 [5], the MAC entity shall for each PDCCH occasion and for each grant received for this PDCCH occasion:

1>   if a sidelink grant has been received on the PDCCH for the MAC entity's SL-RNTI:

    2>   if the NDI received on the PDCCH has not been toggled compared to the value in the previously received HARQ information for the HARQ Process ID:

        3>   use the received sidelink grant to determine PSCCH duration(s) and PSSCH duration(s) for one or more retransmissions of a single MAC PDU for the corresponding Sidelink process according to clause 8.1.2 of TS 38.214 [7].

    2>   else:

        3>   use the received sidelink grant to determine PSCCH duration(s) and PSSCH duration(s) for initial transmission and, if available, retransmission(s) of a single MAC PDU according to clause 8.1.2 of TS 38.214 [7].

    2>   if a sidelink grant is available for retransmission(s) of a MAC PDU which has been positively acknowledged as specified in clause 5.22.1.3.1a:

        3>   clear the PSCCH duration(s) and PSSCH duration(s) corresponding to retransmission(s) of the MAC PDU from the sidelink grant.

1>   else if a sidelink grant has been received on the PDCCH for the MAC entity's SLCS-RNTI:

    2>   if PDCCH contents indicate retransmission(s) for the identifed HARQ process ID that has been set for an activated configured sidelink grant identified by *sl-ConfigIndexCG*:

        3>   use the received sidelink grant to determine PSCCH duration(s) and PSSCH duration(s) for one or more retransmissions of

a single MAC PDU according to clause 8.1.2 of TS 38.214 [7].

    2>   else if PDCCH contents indicate configured grant Type 2 deactivation for a configured sidelink grant:

        3>   trigger configured sidelink grant confirmation for the configured sidelink grant.

    2>   else if PDCCH contents indicate configured grant Type 2 activation for a configured sidelink grant:

        3>   trigger configured sidelink grant confirmation for the configured sidelink grant;

        3>   store the configured sidelink grant;

        3>   initialise or re-initialise the configured sidelink grant to determine the set of PSCCH durations and the set of PSSCH durations for transmissions of multiple MAC PDUs according to clause 8.1.2 of TS 38.214 [7].

If the MAC entity has been configured with Sidelink resource allocation mode 2 to transmit using pool(s) of resources in a carrier as indicated in TS 38.331 [5] or TS 36.331 [21] based on sensing or random selection, the MAC entity shall for each Sidelink process:

NOTE 1: If the MAC entity is configured with Sidelink resource allocation mode 2 to transmit using a pool of resources in a carrier as indicated in TS 38.331 [5] or TS 36.331 [21], the MAC entity can create a selected sidelink grant on the pool of resources based on random selection or sensing only after releasing configured sidelink grant(s), if any.

NOTE 2: The MAC entity expects that PSFCH is always configured by RRC for at least one pool of resources in case that at least a logical channel configured with *sl-HARQ-FeedbackEnabled* is set to *enabled*.

1> if the MAC entity has selected to create a selected sidelink grant corresponding to transmissions of multiple MAC PDUs, and SL data is available in a logical channel:

    2> if the MAC entity has not selected a pool of resources allowed for the logical channel:

        3> if *sl-HARQ-FeedbackEnabled* is set to *enabled* for the logical channel:

            4> select any pool of resources configured with PSFCH resources among the pools of resources;

        3> else:

            4> select any pool of resources among the pools of resources;

    2> perform the TX resource (re-)selection check on the selected pool of resources as specified in clause 5.22.1.2;

NOTE 3: The MAC entity continuously performs the TX resource (re-)selection check until the corresponding pool of resources is released by RRC or the MAC entity decides to cancel creating a selected sidelink grant corresponding to transmissions of multiple MAC PDUs.

    2> if the TX resource (re-)selection is triggered as the result of the TX resource (re-)selection check:

        3> select one of the allowed values configured by RRC in *sl-ResourceReservePeriodList* and set the resource reservation interval, $P_{\mathrm{rsvp\_TX}}$, with the selected value;

NOTE 3A: The MAC entity selects a value for the resource reservation interval which is larger than the remaining PDB of SL data available in the logical channel.

        3> randomly select, with equal probability, an integer value in the interval [5, 15] for the resource reservation interval higher than or equal to 100ms or in the interval $\left[ 5 \times \left\lceil \dfrac{100}{\max(20, P_{\mathrm{rsvp\_TX}})} \right\rceil, 15 \times \left\lceil \dfrac{100}{\max(20, P_{\mathrm{rsvp\_TX}})} \right\rceil \right]$ for the resource reservation interval lower than 100ms and set *SL_RESOURCE_RESELECTION_COUNTER* to the selected value;

        3> select the number of HARQ retransmissions from the allowed numbers that are configured by RRC in *sl-MaxTxTransNumPSSCH* included in *sl-PSSCH-TxConfigList* and, if configured by RRC, overlapped in *sl-MaxTxTransNumPSSCH* indicated in *sl-CBR-PriorityTxConfigList* for the highest priority of the logical channel(s) allowed on the carrier and the CBR measured by lower layers according to clause 5.1.27 of TS 38.215 [24] if CBR measurement results are available or the corresponding *sl-defaultTxConfigIndex* configured by RRC if CBR measurement results are not available;

        3> select an amount of frequency resources within the range that is configured by RRC between *sl-MinSubChannelNumPSSCH* and *sl-MaxSubchannelNumPSSCH* included in *sl-PSSCH-TxConfigList* and, if configured by RRC, overlapped between *MinSubChannelNumPSSCH* and *MaxSubchannelNumPSSCH* indicated in *sl-CBR-PriorityTxConfigList* for the highest priority of the logical channel(s) allowed on the carrier and the CBR measured by lower layers according to clause 5.1.27 of TS 38.215 [24] if CBR measurement results are available or the corresponding *sl-defaultTxConfigIndex* configured by RRC if CBR measurement results are not available;

        3> randomly select the time and frequency resources for one transmission opportunity from the resources indicated by the physical layer as specified in clause 8.1.4 of TS 38.214 [7], according to the amount of selected frequency resources and the remaining PDB of SL data available in the logical channel(s) allowed on the carrier.

        3> use the randomly selected resource to select a set of periodic resources spaced by the resource reservation interval for transmissions of PSCCH and PSSCH corresponding to the number of transmission opportunities of MAC PDUs determined in TS 38.214 [7];

    3> if one or more HARQ retransmissions are selected:

        4> if there are available resources left in the resources indicated by the physical layer according to clause 8.1.4 of TS 38.214 [7] for more transmission opportunities:

            5> randomly select the time and frequency resources for one or more transmission opportunities from the available resources, according to the amount of selected frequency resources, the selected number of HARQ retransmissions and the remaining PDB of SL data available in the logical channel(s) allowed on the carrier by ensuring the minimum time gap between any two selected resources in case that PSFCH is configured for this pool of resources and that a retransmission resource can be indicated by the time resource assignment of a prior SCI according to clause 8.3.1.1 of TS 38.212 [9];

5> use the randomly selected resource to select a set of periodic resources spaced by the resource reservation interval for transmissions of PSCCH and PSSCH corresponding to the number of retransmission opportunities of the MAC PDUs determined in TS 38.214 [7];

5> consider the first set of transmission opportunities as the initial transmission opportunities and the other set(s) of transmission opportunities as the retransmission opportunities;

5> consider the sets of initial transmission opportunities and retransmission opportunities as the selected sidelink grant.

3> else:

4> consider the set as the selected sidelink grant.

3> use the selected sidelink grant to determine the set of PSCCH durations and the set of PSSCH durations according to TS 38.214 [7].

2> else if $SL\_RESOURCE\_RESELECTION\_COUNTER$ = 0 and when $SL\_RESOURCE\_RESELECTION\_COUNTER$ was equal to 1 the MAC entity randomly selected, with equal probability, a value in the interval [0, 1] which is less than or equal to the probability configured by RRC in $sl\text{-}ProbResourceKeep$:

3> clear the selected sidelink grant, if available;

3> randomly select, with equal probability, an integer value in the interval [5, 15] for the resource reservation interval higher than or equal to 100ms or in the interval $\left[ 5 \times \left[ \dfrac{100}{\max(20, P_{\text{rsvp\_TX}})} \right], 15 \times \left[ \dfrac{100}{\max(20, P_{\text{rsvp\_TX}})} \right] \right]$ for the resource reservation interval lower than 100ms and set $SL\_RESOURCE\_RESELECTION\_COUNTER$ to the selected value;

3> reuse the previously selected sidelink grant for the number of transmissions of the MAC PDUs determined in TS 38.214 [7] with the resource reservation interval to determine the set of PSCCH durations and the set of PSSCH durations according to TS 38.214 [7].

1> if the MAC entity has selected to create a selected sidelink grant corresponding to transmission(s) of a single MAC PDU, and if SL data is available in a logical channel, or a SL-CSI reporting is triggered:

2> if SL data is available in the logical channel:

3> if $sl\text{-}HARQ\text{-}FeedbackEnabled$ is set to $enabled$ for the logical channel:

4> select any pool of resources configured with PSFCH resources among the pools of resources;

3> else:

4> select any pool of resources among the pools of resources;

2> else if a SL-CSI reporting is triggered:

3> select any pool of resources among the pools of resources.

2> perform the TX resource (re-)selection check on the selected pool of resources as specified in clause 5.22.1.2;

2> if the TX resource (re-)selection is triggered as the result of the TX resource (re-)selection check:

3> select the number of HARQ retransmissions from the allowed numbers that are configured by RRC in $sl\text{-}MaxTxTransNumPSSCH$ included in $sl\text{-}PSSCH\text{-}TxConfigList$ and, if configured by RRC, overlapped in $sl\text{-}MaxTxTransNumPSSCH$ indicated in $sl\text{-}CBR\text{-}PriorityTxConfigList$ for the highest priority of the logical channel(s) allowed on the carrier and the CBR measured by lower layers according to clause 5.1.27 of TS 38.215 [24] if CBR measurement results are available or the corresponding $sl\text{-}defaultTxConfigIndex$ configured by RRC if CBR measurement results are not available;

3> select an amount of frequency resources within the range that is configured by RRC between $sl\text{-}MinSubChannelNumPSSCH$ and $sl\text{-}MaxSubChannelNumPSSCH$ included in $sl\text{-}PSSCH\text{-}TxConfigList$ and, if configured by

RRC, overlapped between $sl\text{-}MinSubChannelNumPSSCH$ and $sl\text{-}MaxSubChannelNumPSSCH$ indicated in $sl\text{-}CBR\text{-}PriorityTxConfigList$ for the highest priority of the logical channel(s) allowed on the carrier and the CBR measured by lower layers according to clause 5.1.27 of TS 38.215 [24] if CBR measurement results are available or the corresponding *sl-defaultTxConfigIndex* configured by RRC if CBR measurement results are not available;

 3> randomly select the time and frequency resources for one transmission opportunity from the resources indicated by the physical layer as specified in clause 8.1.4 of TS 38.214 [7], according to the amount of selected frequency resources and the remaining PDB of SL data available in the logical channel(s) allowed on the carrier, and the latency requirement of the triggered SL CSI reporting;

 3> if one or more HARQ retransmissions are selected:

  4> if there are available resources left in the resources indicated by the physical layer according to clause 8.1.4 of TS 38.214 [7] for more transmission opportunities:

   5> randomly select the time and frequency resources for one or more transmission opportunities from the available resources, according to the amount of selected frequency resources, the selected number of HARQ retransmissions and the remaining PDB of SL data available in the logical channel(s) allowed on the carrier by ensuring the minimum time gap between any two selected resources in case that PSFCH is configured for this pool of resources, and that a retransmission resource can be indicated by the time resource assignment of a prior SCI according to clause 8.3.1.1 of TS 38.212 [9];

   5> consider a transmission opportunity which comes first in time as the initial transmission opportunity and other transmission opportunities as the retransmission opportunities;

   5> consider all the transmission opportunities as the selected sidelink grant;

 3> else:

  4> consider the set as the selected sidelink grant;

 3> use the selected sidelink grant to determine PSCCH duration(s) and PSSCH duration(s) according to TS 38.214 [7].

NOTE 3B:   If retransmission resource(s) cannot be selected by ensuring that the resource(s) can be indicated by the time resource assignment of a prior SCI, how to select the time and frequency resources for one or more transmission opportunities from the available resources is left for UE implementation by ensuring the minimum time gap between any two selected resources in case that PSFCH is configured for this pool of resources.

1> if a selected sidelink grant is available for retransmission(s) of a MAC PDU which has been positively acknowledged as specified in clause 5.22.1.3.3:

 2> clear the PSCCH duration(s) and PSSCH duration(s) corresponding to retransmission(s) of the MAC PDU from the selected sidelink grant.

NOTE 3a:   How the MAC entity determines the remaining PDB of SL data is left to UE implementation.

For a selected sidelink grant, the minimum time gap between any two selected resources comprises:

-  a time gap between the end of the last symbol of a PSSCH transmission of the first resource and the start of the first symbol of the corresponding PSFCH reception determined by *sl-MinTimeGapPSFCH* and *sl-PSFCH-Period* for the pool of resources; and

-  a time required for PSFCH reception and processing plus sidelink retransmission preparation including multiplexing of necessary physical channels and any TX-RX/RX-TX switching time.

NOTE :   How to determine the time required for PSFCH reception and processing plus sidelink retransmission preparation is left to UE implementation.

The MAC entity shall for each PSSCH duration:

1> for each sidelink grant occurring in this PSSCH duration:

 2> if the MAC entity has been configured with Sidelink resource allocation mode 1:

  3> select a MCS which is, if configured, within the range that is configured by RRC between *sl-MinMCS-PSSCH* and *sl-MaxMCS-PSSCH* included in *sl-ConfigDedicatedNR*;

  3> set the resource reservation interval to 0ms.

 2> else:

  3> select a MCS which is, if configured, within the range that is configured by RRC between *sl-MinMCS-PSSCH* and *sl-MaxMCS-PSSCH* included in *sl-PSSCH-TxConfigList* and, if configured by RRC, overlapped between *sl-MinMCS-PSSCH* and *sl-MaxMCS-PSSCH* indicated in *sl-CBR-PriorityTxConfigList* for the highest priority of the sidelink logical channel(s) in the MAC PDU and the CBR measured by lower layers according to clause 5.1.27 of TS 38.215 [24] if CBR measurement results are available or the corresponding *sl-defaultTxConfigIndex* configured by RRC if CBR measurement results are not available;

   3> if the MAC entity decides not to use the selected sidelink grant for the next PSSCH duration:

    4> set the resource reservation interval to 0ms.

   3> else:

    4> set the resource reservation interval to the selected value.

NOTE 5:  MCS selection is up to UE implementation if the MCS or the corresponding range is not configured by RRC.

  2> if the configured sidelink grant has been activated and this PSSCH duration corresponds to the first PSSCH transmission opportunity within this *sl-PeriodCG* of the configured sidelink grant:

   3> set the HARQ Process ID to the HARQ Process ID associated with this PSSCH duration and, if available, all subsequent PSSCH duration(s) occuring in this *sl-PeriodCG* for the configured sidelink grant;

   3> determine that this PSSCH duration is used for initial transmission;

   3> flush the HARQ buffer of Sidelink process associated with the HARQ Process ID.

  2> deliver the sidelink grant, the selected MCS, and the associated HARQ information to the Sidelink HARQ Entity for this PSSCH duration.

For configured sidelink grants, the HARQ Process ID associated with the first slot of a SL transmission is derived from the following equation:

$$\text{HARQ Process ID} = [\text{floor}(\text{CURRENT\_slot} / \textit{sl-PeriodCG})] \text{ modulo } \textit{sl-NrOfHARQ-Processes} + \textit{sl-HARQ-ProcID-offset}$$

where CURRENT_slot = (SFN × *numberOfSlotsPerFrame* + slot number in the frame), and *numberOfSlotsPerFrame* refer to the number of consecutive slots per frame as specified in TS 38.211 [8].

5.22.1.2    TX resource (re-)selection check

If the TX resource (re-)selection check procedure is triggered on the selected pool of resources for a Sidelink process according to clause 5.22.1.1, the MAC entity shall for the Sidelink process:

 1> if *SL_RESOURCE_RESELECTION_COUNTER* = 0 and when *SL_RESOURCE_RESELECTION_COUNTER* was equal to 1 the MAC entity randomly selected, with equal probability, a value in the interval [0, 1] which is above the probability configured by RRC in *sl-ProbResourceKeep*; or

 1> if the pool of resources is configured or reconfigured by RRC; or

 1> if there is no selected sidelink grant on the selected pool of resources; or

 1> if neither transmission nor retransmission has been performed by the MAC entity on any resource indicated in the selected sidelink grant during the last second; or

 1> if *sl-ReselectAfter* is configured and the number of consecutive unused transmission opportunities on resources indicated in the selected sidelink grant is equal to *sl-ReselectAfter*; or

 1> if the selected sidelink grant cannot accommodate a RLC SDU by using the maximum allowed MCS configured by RRC in *sl-MaxMCS-PSSCH* and the UE selects not to segment the RLC SDU; or

NOTE 1:  If the selected sidelink grant cannot accommodate the RLC SDU, it is left for UE implementation whether to perform segmentation or sidelink resource reselection.

 1> if transmission(s) with the selected sidelink grant cannot fulfil the latency requirement of the data in a logical channel according to the associated priority, and the MAC entity selects not to perform transmission(s) corresponding to a single MAC PDU:

NOTE 2:  If the latency requirement is not met, it is left for UE implementation whether to perform transmission(s) corresponding to single MAC PDU or sidelink resource reselection.

NOTE 3:  It is left for UE implementation whether to trigger the TX resource (re-)selection due to the latency requirement of the MAC CE triggered according to clause 5.22.1.7.

  2> clear the selected sidelink grant associated to the Sidelink process, if available;

  2> trigger the TX resource (re-)selection.

 1> if a resource(s) of the selected sidelink grant which has not been identified by a prior SCI is indicated for re-evaluation by the physical layer as specified in clause 8.1.4 of TS 38.214 [7]; or

1> if any resource(s) of the selected sidelink grant which has been indicated by a prior SCI is indicated for pre-emption by the physical layer as specified in clause 8.1.4 of TS 38.214 [7]; or

1> if retransmission of a MAC PDU on the selected sidelink grant has been dropped by either sidelink congestion control as specified in clause 8.1.6 of TS 38.214 or de-prioritization as specified in clause 16.2.4 of TS 38.213 [6], clause 5.4.2.2 of TS 36.321 [22] and

clause 5.4.2.2:

2> remove the resource(s) from the selected sidelink grant associated to the Sidelink process, if the resource(s) of the selected sidelink grant is indicated for re-evaluation or pre-emption by the physical layer;

2> randomly select the time and frequency resource from the resources indicated by the physical layer as specified in clause 8.1.4 of TS 38.214 [7] for either the removed resource or the dropped resource, according to the amount of selected frequency resources, the selected number of HARQ retransmissions and the remaining PDB of either SL data available in the logical channel(s) by ensuring the minimum time gap between any two selected resources of the selected sidelink grant in case that PSFCH is configured for this pool of resources, and that a resource can be indicated by the time resource assignment of a SCI for a retransmission according to clause 8.3.1.1 of TS 38.212 [9];

NOTE 4: If retransmission resource(s) cannot be selected by ensuring that the resource(s) can be indicated by the time resource assignment of a prior SCI, how to select the time and frequency resources for one or more transmission opportunities from the available resources is left for UE implementation by ensuring the minimum time gap between any two selected resources in case that PSFCH is configured for this pool of resources.

2> replace the removed or dropped resource(s) by the selected resource(s) for the selected sidelink grant.

NOTE 5: It is left for UE implementation to reselect any pre-selected but not reserved resource(s) during reselection triggered by re-evaluation or pre-emption indicated by the physical layer.

5.22.1.3        Sidelink HARQ operation

5.22.1.3.1        Sidelink HARQ Entity

The MAC entity includes at most one Sidelink HARQ entity for transmission on SL-SCH, which maintains a number of parallel Sidelink processes.

The maximum number of transmitting Sidelink processes associated with the Sidelink HARQ Entity is 16. A sidelink process may be configured for transmissions of multiple MAC PDUs. For transmissions of multiple MAC PDUs with Sidelink resource allocation mode 2, the maximum number of transmitting Sidelink processes associated with the Sidelink HARQ Entity is 4.

A delivered sidelink grant and its associated Sidelink transmission information are associated with a Sidelink process. Each Sidelink process supports one TB.

For each sidelink grant, the Sidelink HARQ Entity shall:

1> if the MAC entity determines that the sidelink grant is used for initial transmission as specified in clause 5.22.1.1; or

1> if the sidelink grant is a configured sidelink grant and no MAC PDU has been obtained in a *sl-PeriodCG* of the configured sidelink grant:

NOTE 1:        Void.

2> (re-)associate a Sidelink process to this grant, and for the associated Sidelink process:

NOTE 1A:        The Sidelink HARQ Entity will associate the selected sidelink grant to the Sidelink process determined by the MAC entity.

3> obtain the MAC PDU to transmit from the Multiplexing and assembly entity, if any;

3> if a MAC PDU to transmit has been obtained:

4> if a HARQ Process ID has been set for the sidelink grant:

5> (re-)associate the HARQ Process ID corresponding to the sidelink grant to the Sidelink process;

NOTE 1a:        There is one-to-one mapping between a HARQ Process ID and a Sidelink process in the MAC entity configured with Sidelink resource allocation mode 1.

4> determines Sidelink transmission information of the TB for the source and destination pair of the MAC PDU as follows:

5> set the Source Layer-1 ID to the 8 LSB of the Source Layer-2 ID of the MAC PDU;

5> set the Destination Layer-1 ID to the 16 LSB of the Destination Layer-2 ID of the MAC PDU;

5> (re-)associate the Sidelink process to a Sidelink process ID;

NOTE 1b: How UE determine Sidelink process ID in SCI is left to UE implementation for NR sidelink.

5> consider the NDI to have been toggled compared to the value of the previous transmission corresponding to the Sidelink identification information and the Sidelink process ID of the MAC PDU and set the NDI to the toggled value;

---

NOTE 2: The initial value of the NDI set to the very first transmission for the associated Sidelink process is left to UE implementation.

NOTE 3: Void.

5> set the cast type indicator to one of broadcast, groupcast and unicast as indicated by upper layers;

5> if HARQ feedback has been enabled for the MAC PDU according to clause 5.22.1.4.2;

6> set the HARQ feedback enabled/disabled indicator to *enabled*.

5> else:

6> set the HARQ feedback enabled/disabled indicator to *disabled*.

5> set the priority to the value of the highest priority of the logical channel(s), if any, and a MAC CE, if included, in the MAC PDU;

5> if HARQ feedback is enabled for groupcast:

6> if both a group size and a member ID are provided by upper layers and the group size is not greater than the number of candidate PSFCH resources associated with this sidelink grant:

7> select either positive-negative acknowledgement or negative-only acknowledgement.

NOTE 4: Selection of positive-negative acknowledgement or negative-only acknowledgement is up to UE implementation.

6> else:

7> select negative-only acknowledgement.

6> if negative-only acknowledgement is selected, UE's location information is available, and *sl-TransRange* has been configured for a logical channel in the MAC PDU, and *sl-ZoneConfig* is configured as specified in TS 38.331 [5]:

7> set the communication range requirement to the value of the longest communication range of the logical channel(s) in the MAC PDU;

7> determine the value of *sl-ZoneLength* corresponding to the communication range requirement and set Zone_id to the value of Zone_id calculated using the determined value of *sl-ZoneLength* as specified in TS 38.331 [5].

4> deliver the MAC PDU, the sideink grant and the Sidelink transmission information of the TB to the associated Sidelink process;

4> instruct the associated Sidelink process to trigger a new transmission.

3> else:

4> flush the HARQ buffer of the associated Sidelink process.

1> else (i.e. retransmission):

2> if the HARQ Process ID corresponding to the sidelink grant received on PDCCH, the configured sidelink grant or the selected sidelink grant is associated to a Sidelink process of which HARQ buffer is empty; or

2> if the HARQ Process ID corresponding to the sidelink grant received on PDCCH is not associated to any Sidelink process:

3> ignore the sidelink grant.

2> else:

3> identify the Sidelink process associated with this grant, and for the associated Sidelink process:

4> deliver the sidelink grant of the MAC PDU to the associated Sidelink process;

4> instruct the associated Sidelink process to trigger a retransmission.

5.22.1.3.1a                    Sidelink process

The Sidelink process is associated with a HARQ buffer.

New transmissions and retransmissions are performed on the resource indicated in the sidelink grant as specified in clause 5.22.1.1 and with the MCS selected as specified in clause 8.1.3.1 of TS 38.214 [7] and clause 5.22.1.1.

If the Sidelink process is configured to perform transmissions of multiple MAC PDUs with Sidelink resource allocation mode 2, the

process maintains a counter *SL_RESOURCE_RESELECTION_COUNTER*. For other configurations of the Sidelink process, this counter

is not

---

available.

If the Sidelink HARQ Entity requests a new transmission, the Sidelink process shall:

1> store the MAC PDU in the associated HARQ buffer;

1> store the sidelink grant received from the Sidelink HARQ Entity;

1> generate a transmission as described below.

If the Sidelink HARQ Entity requests a retransmission, the Sidelink process shall:

1> store the sidelink grant received from the Sidelink HARQ Entity;

1> generate a transmission as described below.

To generate a transmission, the Sidelink process shall:

1> if there is no uplink transmission; or

1> if the MAC entity is able to simultaneously perform uplink transmission(s) and sidelink transmission at the time of the transmission; or

1> if the other MAC entity and the MAC entity are able to simultaneously perform uplink transmission(s) and sidelink transmission at the time of the transmission respectively; or

1> if there is a MAC PDU to be transmitted for this duration in uplink, except a MAC PDU obtained from the Msg3 buffer, the MSGA buffer, or prioritized as specified in clause 5.4.2.2, and the sidelink transmission is prioritized over uplink transmission:

2> instruct the physical layer to transmit SCI according to the stored sidelink grant with the associated Sidelink transmission information;

2> instruct the physical layer to generate a transmission according to the stored sidelink grant;

2> if HARQ feedback has been enabled the MAC PDU according to clause 5.22.1.4.2:

3> instruct the physical layer to monitor PSFCH for the transmission and perform PSFCH reception as specified in clause 5.22.1.3.2.

2> if *sl-PUCCH-Config* is configured by RRC for the stored sidelink grant:

3> determine transmission of an acknowledgement on the PUCCH as specified in clause 5.22.1.3.2.

1> if this transmission corresponds to the last transmission of the MAC PDU:

2> decrement *SL_RESOURCE_RESELECTION_COUNTER* by 1, if available.

NOTE 1:    If the number of HARQ retransmissions selected by the MAC entity has been reached, if a positive acknowledgement to a transmission of the MAC PDU has been received, or if a negative-only acknowledgement was enabled in the SCI and no negative acknowledgement was received for the transmission of the MAC PDU, the MAC entity determines this transmission corresponds to the last transmission of the MAC PDU for Sidelink resource allocation mode 2. How to determine the last transmission in other cases is up to UE implementation.

1> if *sl-MaxTransNum* corresponding to the highest priority of the logical channel(s) in the MAC PDU has been configured in *sl-CG-MaxTransNumList* for the sidelink grant by RRC and the number of transmissions of the MAC PDU has been reached to *sl-MaxTransNum*; or

1> if a positive acknowledgement to this transmission of the MAC PDU was received according to clause 5.22.1.3.2; or

1> if negative-only acknowledgement was enabled in the SCI and no negative acknowledgement was received for this transmission of the MAC PDU according to clause 5.22.1.3.2:

2> flush the HARQ buffer of the associated Sidelink process.

The transmission of the MAC PDU is prioritized over uplink transmissions of the MAC entity or the other MAC entity if the following conditions are met:

1> if the MAC entity is not able to perform this sidelink transmission simultaneously with all uplink transmissions at the time of the transmission, and

1> if uplink transmission is neither prioritized as specified in clause 5.4.2.2 nor prioritized by upper layer according to TS 23.287 [19]; and

1> if *sl-PrioritizationThres* is configured and if the value of the highest priority of logical channel(s) or a MAC CE in the MAC PDU is lower than *sl-PrioritizationThres*.

NOTE 2: If the MAC entity is not able to perform this sidelink transmission simultaneously with all uplink transmissions as specified in clause 5.4.2.2 of TS 36.321 [22] at the time of the transmission, and prioritization-related information

is not available prior to the time of this sidelink transmission due to processing time restriction, it is up to UE implementation whether this sidelink transmission is performed.

5.22.1.3.2                 PSFCH reception

The MAC entity shall for each PSSCH transmission:

1> if an acknowledgement corresponding to the PSSCH transmission in clause 5.22.1.3.1a is obtained from the physical layer:

2> deliver the acknowledgement to the corresponding Sidelink HARQ entity for the Sidelink process;

1> else:

2> deliver a negative acknowledgement to the corresponding Sidelink HARQ entity for the Sidelink process;

1> if the PSSCH transmission occurs for a pair of Source Layer-2 ID and Destination Layer-2 ID corresponding to a PC5-RRC connection which has been established by upper layers:

2> perform the HARQ-Based Sidelink RLF Detection procedure as specified in clause 5.22.1.3.3.

If *sl-PUCCH-Config* is configured by RRC, the MAC entity shall for a PUCCH transmission occasion:

1> if the *timeAlignmentTimer*, associated with the TAG containing the Serving Cell on which the HARQ feedback is to be transmitted, is stopped or expired:

2> not instruct the physical layer to generate acknowledgement(s) of the data in this TB.

1> else if a MAC PDU has been obtained for a sidelink grant associated to the PUCCH transmission occasion in clause 5.22.1.3.1, the MAC entity shall:

2> if the most recent transmission of the MAC PDU was not prioritized as specified in clause 5.22.1.3.1a:

3> instruct the physical layer to signal a negative acknowledgement on the PUCCH according to clause 16.5 of TS 38.213 [6].

2> else if HARQ feedback has been disabled for the MAC PDU and next retransmission(s) of the MAC PDU is not required:

3> instruct the physical layer to signal a positive acknowledgement corresponding to the transmission on the PUCCH according to clause 16.5 of TS 38.213 [6].

2> else if HARQ feedback has been disabled for the MAC PDU and no sidelink grant is available for next retransmission(s) of the MAC PDU, if any:

EP 4 287 739 A1

3> instruct the physical layer to signal a negative acknowledgement corresponding to the transmission on the PUCCH according to clause 16.5 of TS 38.213 [6].

2> else:

3> instruct the physical layer to signal an acknowledgement corresponding to the transmission on the PUCCH according to clause 16.5 of TS 38.213 [6]

1> else:

2> instruct the physical layer to signal a positive acknowledgement on the PUCCH according to clause 16.5 of TS 38.213 [6].

5.22.1.3.3                HARQ-based Sidelink RLF detection

The HARQ-based Sidelink RLF detection procedure is used to detect Sidelink RLF based on a number of consecutive DTX on PSFCH reception occasions for a PC5-RRC connection.

RRC configures the following parameter to control HARQ-based Sidelink RLF detection:

- *sl-maxNumConsecutiveDTX*.

The following UE variable is used for HARQ-based Sidelink RLF detection.

- *numConsecutiveDTX*, which is maintained for each PC5-RRC connection.

The Sidelink HARQ Entity shall (re-)initialize *numConsecutiveDTX* to zero for each PC5-RRC connection which has been established by upper layers, if any, upon establishment of the PC5-RRC connection or (re)configuration of *sl-maxNumConsecutiveDTX*.

The Sidelink HARQ Entity shall for each PSFCH reception occasion associated to the PSSCH transmission:

1> if PSFCH reception is absent on the PSFCH reception occasion:

2> increment *numConsecutiveDTX* by 1;

2> if *numConsecutiveDTX* reaches *sl-maxNumConsecutiveDTX*:

3> indicate HARQ-based Sidelink RLF detection to RRC.

1> else:

2> re-initialize *numConsecutiveDTX* to zero.

5.22.1.4                Multiplexing and assembly

For PDU(s) associated with one SCI, MAC shall consider only logical channels with the same Source Layer-2 ID-Destination Layer-2 ID pair for one of unicast, groupcast and broadcast which is associated with the pair. Multiple transmissions for different Sidelink processes are allowed to be independently performed in different PSSCH durations.

5.22.1.4.1                Logical channel prioritization

5.22.1.4.1.1                General

The sidelink Logical Channel Prioritization procedure is applied whenever a new transmission is performed.

RRC controls the scheduling of sidelink data by signalling for each logical channel:

- *sl-Priority* where an increasing priority value indicates a lower priority level;

- *sl-PrioritisedBitRate* which sets the sidelink Prioritized Bit Rate (sPBR);

- *sl-BucketSizeDuration* which sets the sidelink Bucket Size Duration (sBSD).

RRC additionally controls the LCP procedure by configuring mapping restrictions for each logical channel:

- *sl-configuredGrantType1Allowed* which sets whether a configured grant Type 1 can be used for sidelink transmission;

- *sl-AllowedCG-List* which sets the allowed configured grant(s) for sidelink transmission;

- *sl-HARQ-FeedbackEnabled* which sets whether the logical channel is allowed to be multiplexed with logical channel(s) with *sl-HARQ-FeedbackEnabled* set to *enabled* or *disabled*.

The following UE variable is used for the Logical channel prioritization procedure:

- *SBj* which is maintained for each logical channel *j*.

The MAC entity shall initialize *SBj* of the logical channel to zero when the logical channel is established.

For each logical channel *j*, the MAC entity shall:

1> increment *SBj* by the product sPBR × T before every instance of the LCP procedure, where T is the time elapsed since *SBj* was last incremented;

1> if the value of *SBj* is greater than the sidelink bucket size (i.e. sPBR × sBSD):

2> set *SBj* to the sidelink bucket size.

NOTE: The exact moment(s) when the UE updates *SBj* between LCP procedures is up to UE implementation, as long as *SBj* is up to date at the time when a grant is processed by LCP.

5.22.1.4.1.2 Selection of logical channels

The MAC entity shall for each SCI corresponding to a new transmission:

1> select a Destination associated to one of unicast, groupcast and broadcast, having at least one of the MAC CE and the logical channel with the highest priority, among the logical channels that satisfy all the following conditions and MAC CE(s), if any, for the SL grant associated to the SCI:

2> SL data is available for transmission; and

2> *SBj* > 0, in case there is any logical channel having *SBj* > 0; and

2> *sl-configuredGrantType1Allowed*, if configured, is set to *true* in case the SL grant is a Configured Grant Type 1; and

2> *sl-AllowedCG-List*, if configured, includes the configured grant index associated to the SL grant; and

2> *sl-HARQ-FeedbackEnabled* is set to *disabled*, if PSFCH is not configured for the SL grant associated to the SCI.

NOTE: If multiple Destinations have the logical channels satisfying all conditions above with the same highest priority or if multiple

Destinations have either the MAC CE and/or the logical channels satisfying all conditions above with the same priority as the MAC CE, which Destination is selected among them is up to UE implementation.

1> select the logical channels satisfying all the following conditions among the logical channels belonging to the selected Destination:

2> SL data is available for transmission; and

2> *sl-configuredGrantType1Allowed*, if configured, is set to *true* in case the SL grant is a Configured Grant Type 1; and.

2> *sl-AllowedCG-List*, if configured, includes the configured grant index associated to the SL grant; and

3> if PSFCH is configured for the sidelink grant associated to the SCI:

4> *sl-HARQ-FeedbackEnabled* is set to *enabled*, if *sl-HARQ-FeedbackEnabled* is set to *enabled* for the highest priority logical channel satisfying the above conditions; or

4> *sl-HARQ-FeedbackEnabled* is set to *disabled*, if *sl-HARQ-FeedbackEnabled* is set to *disabled* for the highest priority logical channel satisfying the above conditions.

3> else:

4> sl-HARQ-FeedbackEnabled is set to disabled.

5.22.1.4.1.3 Allocation of sidelink resources

The MAC entity shall for each SCI corresponding to a new transmission:

1> allocate resources to the logical channels as follows:

2> logical channels selected in clause 5.22.1.4.1.2 for the SL grant with *SBj* > 0 are allocated resources in a decreasing priority order. If the sPBR of a logical channel is set to *infinity*, the MAC entity shall allocate resources for all the data that is available for transmission on the logical channel before meeting the sPBR of the lower priority logical channel(s);

2> decrement $SBj$ by the total size of MAC SDUs served to logical channel $j$ above;

2> if any resources remain, all the logical channels selected in clause 5.22.1.4.1.2 are served in a strict decreasing priority order (regardless of the value of $SBj$) until either the data for that logical channel or the SL grant is exhausted, whichever comes first. Logical channels configured with equal priority should be served equally.

NOTE: The value of $SBj$ can be negative.

The UE shall also follow the rules below during the SL scheduling procedures above:

- the UE should not segment an RLC SDU (or partially transmitted SDU or retransmitted RLC PDU) if the whole SDU (or partially transmitted SDU or retransmitted RLC PDU) fits into the remaining resources of the associated MAC entity;

- if the UE segments an RLC SDU from the logical channel, it shall maximize the size of the segment to fill the grant of the associated MAC entity as much as possible;

- the UE should maximise the transmission of data;

- if the MAC entity is given a sidelink grant size that is equal to or larger than 12 bytes while having data available and allowed (according to clause 5.22.1.4.1) for transmission, the MAC entity shall not transmit only padding;

- A logical channel configured with *sl-HARQ-FeedbackEnabled* set to *enabled* and a logical channel configured with *sl-HARQ-FeedbackEnabled* set to *disabled* cannot be multiplexed into the same MAC PDU.

The MAC entity shall not generate a MAC PDU for the HARQ entity if the following conditions are satisfied:

- there is no Sidelink CSI Reporting MAC CE generated for this PSSCH transmission as specified in clause 5.22.1.7; and

- the MAC PDU includes zero MAC SDUs.

Logical channels shall be prioritised in accordance with the following order (highest priority listed first):

- data from SCCH;

- Sidelink CSI Reporting MAC CE;

- data from any STCH.

5.22.1.4.2            Multiplexing of MAC Control Elements and MAC SDUs

The MAC entity shall multiplex a MAC CE and MAC SDUs in a MAC PDU according to clauses 5.22.1.4.1 and 6.1.6.

For Sidelink Mode 2, the UE autonomously reserves a resource set in the resource pool. When a physical sidelink feedback channel (PSFCH) is configured for the resource pool, the LTE randomly selects a time and frequency resource for one or more transmission occasions from among the available resources, depending on the amount of frequency resources selected. The selected number of HARQ retransmissions and the remaining PDB of SL data available on the logical channel(s) may be allowed by the carrier by ensuring a minimum time gap between two selected resources. The resources for retransmissions may be indicated by the time resource allocation of the previous SCI, according to clause 8.3.1.1 of TS 38.212.

The minimum time gap between the two selected resources is configured as follows.

- a time gap between the end of the last symbol of a physical sidelink shared channel (PSSCH) transmission of the first resource and the start of the first symbol of the corresponding PSFCH reception determined by sl-MinTimeGapPSFCH and sl-PSFCH-Period for the pool of resources; and
- a time required for PSFCH reception and processing plus sidelink retransmission preparation including multiplexing of necessary physical channels and any TX-RX/RX-TX switching time.

For example, when the UE selects a pool of resources (resource pool) configured by the PSFCH for HARQ feedback transmission, the UE shall reserve two resources for the initial HARQ transmission of the TB and the retransmission of the TB by ensuring a minimum time gap between the initial HARQ transmission and the retransmission of the TB. When the minimum time gap is 3 slots, the UE shall randomly select a resource with a time gap of at least 3 slots between resources for multiple HARQ transmissions of the TB.

When SL data is available on a logical channel on which HARQ feedback is enabled and the PSFCH is configured for the resource pool, the UE may reserve the selected sidelink grant for HARQ (re)transmission of the TB by ensuring a minimum time gap between HARQ (re)transmissions of the TB.

On the other hand, when SL data is available on a logical channel on which HARQ feedback is disabled, the LTE may reserve the selected sidelink grant for HARQ (re)transmission of the TB without ensuring a minimum time gap between HARQ (re)transmissions of the TB, regardless of whether PSFCH is configured.

However, when the PSFCH is configured, the UE may send TBs in which HARQ feedback is enabled, using the resources for the selected sidelink grant. Therefore, the UE may fail to perform HARQ retransmissions based on HARQ feedback because the minimum time gap between HARQ (re)transmissions of the TB is not supportable.

Therefore, a method of performing data transmission by the UE may include the following steps:

- The UE is configured with a resource pool in which a HARQ feedback channel (PSFCH) is configured.
- The LTE autonomously (re)selects a set of resources (i.e., selected sidelink grants) from among the available resources in the resource pool for the N transmission(s) of the transport block (TB) by ensuring a minimum time gap between two consecutive transmissions of the TB out of N transmissions. The available resources are considered idle resources based on the sensing of the resource pool and are represented as a physical layer. When the LTE cannot (re)select a resource set by ensuring a minimum time gap between two consecutive transmissions of the TB out of N transmissions, the UE autonomously (re)selects a resource set (i.e., the selected sidelink grant) from the available resources in the resource pool for N transmissions of the TB without ensuring a minimum time gap.
- When the PSFCH is configured for a sidelink grant of the selected sidelink grants (i.e., resources in the resource set) and the consecutive sidelink grants used for transmission of the TB can meet the minimum time gap, the UE generates a TB (i.e., MAC PDU) for the sidelink grant and enables HARQ feedback for transmission of the TB. The TB contains only SL data on the logical channel on which HARQ feedback is enabled.
- When the PSFCH is not configured for the sidelink grant of the selected sidelink grants, or when the consecutive sidelink grants used for transmission of the TB cannot meet the minimum time gap, the UE generates a TB (i.e., MAC PDU) for the sidelink grant and disables the HARQ feedback for transmission of the TB. The TB contains only SL data on the logical channel on which HARQ feedback is disabled.
- The UE performs the transmission of the TB using the sidelink grant.
- When the HARQ feedback is enabled for the TB, the UE monitors the PSFCH. When HARQ NACK is received on the PSFCH and the sidelink grant of the selected sidelink grants is retransmittable, the LTE performs the retransmission of the TB using the sidelink grant. Upon receiving a HARQ ACK, the UE generates a new TB for the sidelink grant of the selected sidelink grants.
- When the HARQ feedback is disabled for the TB, the UE does not monitor the PSFCH. When the sidelink grant of the selected sidelink grants is retransmissible, the UE performs the retransmission of the TB using the sidelink grant.
- When the HARQ feedback is enabled for the TB and two consecutive resources for the selected sidelink grants for the selected pool are used for the (re)transmission of the TB, when two consecutive resources of the selected pool for which the PSFCH is configured cannot meet the minimum time gap, or when two consecutive resources of the selected pool for which the PSFCH is configured cannot meet the minimum time gap, the UE autonomously (re)selects a resource set (i.e., selected sidelink grants) from the resource pool for the N transmission(s) of the TB by ensuring a minimum time gap between two consecutive transmissions of the TB among the N transmissions.
- The UE performs the (re)transmission of the TB using the reselected sidelink grant.

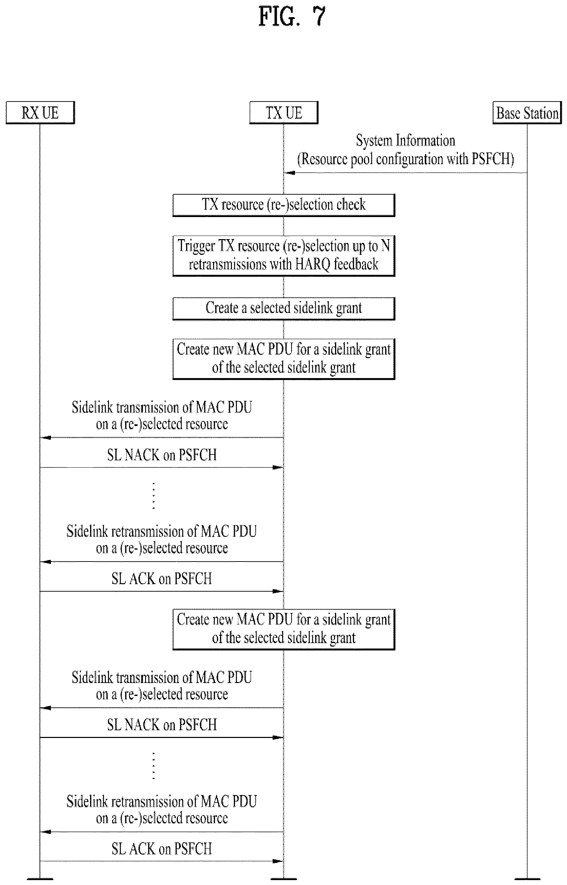

FIG. 7 illustrates an example of a sidelink retransmission method according to the present disclosure.

Referring to FIG. 7, the TX UE performs the following steps

Step 1: The network sends the sidelink configuration to the TX UE through system information or LTE-dedicated RRC signaling. Upon receiving the sidelink configuration from the network, the LTE configures one or more carriers for sidelink resource allocation mode 1 or mode 2, or both, and one or more resource pools on each carrier, with the number of HARQ processes configured for each resource pool on each carrier.

- A resource pool is used for uplink or sidelink transmission.
- Each resource pool is associated with a pool index.
- The maximum number of HARQ processes is set per resource pool.
- The number of retransmissions corresponds to the number of HARQ processes and/or SL RSRP or DL RSRP measured by the UE.

In the TX UE, the RRC shall configure the MAC entity with Sidelink resource allocation mode 2 to transmit using a pool of resources in a carrier based on sensing or random selection, and the MAC entity shall for each Sidelink process.

Step 2: if the MAC entity has selected to create a selected sidelink grant corresponding to transmissions of multiple MAC PDUs, and SL data is available in a logical channel:

if the MAC entity has not selected a pool of resources allowed for the logical channel:

- if sl-HARQ-FeedbackEnabled is set to be enabled for the logical channel, the UE selects any pool of resources configured with PSFCH resources among the pools of resources;
- if sl-HARQ-FeedbackEnabled is set to be enabled for the logical channel, the UE selects any pool of resources among the pools of resources.

Step 3: In the TX UE, when the MAC entity selects a new resource pool (see step 2), or when the MAC entity triggers TX resource (re)election (see step 4 below), the MAC entity performs TX resource (re)election to generate a selected sidelink grant for the selected resource pool according to the following sub-steps of TX resource (re)election.

- The MAC entity selects one of the allowed values configured by RRC in *sl-ResourceReservePeriodList* and set the resource reservation interval, $P_{rsvp\_TX}$, with the selected value.

- The MAC entity randomly select, with equal probability, an integer value in the interval [5, 15] for the resource reservation interval higher than or equal to 100 ms or in the interval $$\left[ 5 \times \left[ \frac{100}{\max\left(20, P_{rsvp\_TX}\right)} \right], 15 \times \left[ \frac{100}{\max\left(20, P_{rsvp\_TX}\right)} \right] \right]$$ for the resource reservation interval lower than 100 ms and sets *SL RESOURCE RESELECTION COUNTER* to the selected value.

- The MAC entity may select the number of HARQ retransmissions according to the following Table 11.

[Table 11]

| |
|---|
| the MAC entity selects the number of HARQ retransmissions from the allowed numbers that are configured by RRC in *sl-MaxTxTransNumPSSCH* included in *sl-PSSCH-TxConfigList* and, if configured by RRC, overlapped in *sl-MaxTxTransNumPSSCH* indicated in *sl-CBR-PriorityTxConfigList* for the highest priority of the logical channel (s) allowed on the carrier and the CBR measured by lower layers according to clause 5.1.27 of TS 38.215 if CBR measurement results are available or the corresponding *sl-defaultTxConfigIndex* configured by RRC if CBR measurement results are not available |

- The MAC entity randomly selects time and frequency resources for one transmission opportunity from the resources indicated by the physical layer as specified in clause 8.1.4 of TS 38.214 according to the amount of selected frequency resources and the remaining PDB of SL data available in the logical channel(s) allowed on the carrier.

- The MAC entity uses the randomly selected resource to select a set of periodic resources spaced by the resource reservation interval for transmissions of PSCCH and PSSCH corresponding to the number of transmission opportunities of MAC PDUs determined in TS 38.214.

- If one or more HARQ retransmissions are selected and there are available resources left in the resources indicated by the physical layer according to clause 8.1.4 of TS 38.214 for more transmission opportunities:

the MAC entity randomly select the time and frequency resources for one or more transmission opportunities from the available resources, according to the amount of selected frequency resources, the selected number of HARQ retransmissions and the remaining PDB of SL data available in the logical channel(s) allowed on the carrier by ensuring the minimum time gap between any two selected resources. The PSFCH may be configured for this pool of resources and a retransmission resource may be indicated by the time resource assignment of a prior SCI according to clause 8.3.1.1 of TS 38.212;

the MAC entity uses the randomly selected resource to select a set of periodic resources spaced by the resource reservation interval for transmissions of PSCCH and PSSCH corresponding to the number of retransmission opportunities of the MAC PDUs determined in TS 38.214;

the MAC entity considers the first set of transmission opportunities as the initial transmission opportunities and the other set(s) of transmission opportunities as the retransmission opportunities;

the MAC entity considers the sets of initial transmission opportunities and retransmission opportunities as the selected sidelink grant.

- When one or more HARQ retransmits are not selected, the MAC entity considers the set as the selected sidelink grant.

- the MAC entity uses the selected sidelink grant to determine the set of PSCCH durations and the set of PSSCH durations according to TS 38.214.

Step 4: In the TX UE, the MAC entity continuously performs the TX resource (re-)selection check until the corresponding pool of resources is released by RRC or the MAC entity decides to cancel creating a selected sidelink grant corresponding to transmissions of multiple MAC PDUs.

If one or more of the following conditions are met, the MAC entity performs the TX resource (re)selection check for the selected pool of resources for the Sidelink process:

- If *SL_RESOURCE_RESELECTION_COUNTER* = 0 and when *SL_RESOURCE_RESELECTION_COUNTER* = 1, the MAC entity has randomly selected, with equal probability, a value in the interval [0, 1] which is above the probability configured by RRC in sl-ProbResourceKeep; or
- if the pool of resources is configured or reconfigured by RRC; or
- if there is no selected sidelink grant on the selected pool of resources; or
- if HARQ feedback has been enabled for the MAC PDU, and two consecutive transmission opportunities of MAC PDUs of a selected sidelink grant for a selected pool for which PSFCH is configured cannot meet the minimum time gap; or
- two consecutive transmission opportunities of MAC PDUs of the selected sidelink grant for the selected pool for which PSFCH is configured cannot meet the minimum time gap; or
- if neither transmission nor retransmission has been performed by the MAC entity on any resource indicated in the selected sidelink grant during the last second; or
- if sl-ReselectAfter is configured and the number of consecutive unused transmission opportunities on resources indicated in the selected sidelink grant is equal to sl-ReselectAfter; or
- if the selected sidelink grant cannot accommodate a RLC SDU by using the maximum allowed MCS configured by RRC in sl-MaxMCS-PSSCH and the UE selects not to segment the RLC SDU; or
- if transmission(s) with the selected sidelink grant cannot fulfil the latency requirement of the data in a logical channel according to the associated priority, and the MAC entity selects not to perform transmission(s) corresponding to a single MAC PDU:
  When the MAC entity performs TX resource (re)election checks on the selected resource pool for the Sidelink process, the TX UE clears the selected sidelink grant associated with the Sidelink process, if available, and triggers TX resource (re-)election.

Step 5: In the TX UE, for each SCI and SL grant corresponding to a new transmission, the MAC entity performs a logical channel prioritization procedure to select the destination associated with one of unicast, groupcast, and broadcast, having at least one of the MAC CE and the logical channel. The logical channel that satisfies both the following conditions and the MAC CE (if any) has the highest priority for the SL grant associated with the SCI:

- SL data is available for transmission; and
- SBj > 0, in case there is any logical channel having SBj > 0; and
- sl-configuredGrantType1Allowed, if configured, is set to true in the case where the SL grant is Configured Grant Type 1; and
- sl-AllowedCG-List, if configured, includes the configured grant index associated with the SL grant; and
- sl-HARQ-FeedbackEnabled is set to disabled, if PSFCH is not configured for the SL grant associated with the SCI.
  If multiple destinations have the logical channels satisfying all conditions above with the same highest priority or if multiple destinations have either the MAC CE and/or the logical channels satisfying all conditions above with the same priority as the MAC CE, which destination is selected among them is up to LTE implementation.

Step 6: At the TX UE, for each SCI and SL grant corresponding to a new transmission, the MAC entity performs a logical channel prioritization procedure to select the logical channels satisfying all the following conditions among the logical channels belonging to the selected destination.:

- SL data is available for transmission; and
- sl-configuredGrantType1Allowed, if configured, is set to true in the case where the SL grant is Configured Grant Type 1; and
- sl-AllowedCG-List, if configured, includes the configured grant index associated with the SL grant.

In this step, if PSFCH is configured for the sidelink grant associated with the SCI, and the consecutive SL grants used for transmission of the MAC PDUs that will be generated for this procedure can meet the minimum time gap:

- if sl-HARQ-FeedbackEnabled is set to enabled for the highest priority logical channel satisfying the above conditions, the MAC entity sets sl-HARQ-FeedbackEnabled to enabled; or

- if sl-HARQ-FeedbackEnabled is set to disabled for the highest priority logical channel satisfying the above conditions, the MAC entity sets sl-HARQ-FeedbackEnabled to disabled.

On the other hand, if the PSFCH is not configured for the sidelink grant associated with the SCI, or if the consecutive SL grants used for transmission of the MAC PDUs to be generated for this procedure cannot meet the minimum time gap, the MAC entity sets sl-HARQ-FeedbackEnabled to disabled.
If the MAC entity sets sl-HARQ-FeedbackEnabled to Enabled, the MAC entity selects the logical channel on which sl-HARQ-FeedbackEnabled is set to enabled. If the MAC entity sets sl-HARQ-FeedbackEnabled to Disabled, the MAC entity selects the logical channel on which sl-HARQ-FeedbackEnabled is set to Disabled.
Then, for each SCI and SL grant corresponding to a new transmission, the MAC entity generates a MAC PDU containing only SL data from the selected logical channel(s) for the HARQ entity. In this case, a logical channel configured with sl-HARQ-FeedbackEnabled set to enabled and a logical channel configured with sl-HARQ-FeedbackEnabled set to disabled cannot be multiplexed into the same MAC PDU.
Step 7: In the TX UE, for each sidelink grant of the selected sidelink grants, if the MAC entity determines that the sidelink grant is used for initial transmission as specified in clause 5.22.1.1; or if the sidelink grant is a configured sidelink grant and no MAC PDU has been obtained in a sl-PeriodCG of the configured sidelink grant, the MAC entity obtains the MAC PDU generated in Step 6.
Once the MAC PDU to be transmitted is obtained, the MAC entity determines Sidelink transmission information of the TB for the source and destination pair of the MAC PDU as follows:

- the MAC entity sets the Source Layer-1 ID to the 8 LSB of the Source Layer-2 ID of the MAC PDU;
- the MAC entity sets the Destination Layer-1 ID to the 16 LSB of the Destination Layer-2 ID of the MAC PDU;
- the MAC entity considers the NDI to have been toggled compared to the value of the previous transmission corresponding to the Sidelink identification information and the Sidelink process ID of the MAC PDU and sets the NDI to the toggled value;
- the MAC entity sets the cast type indicator to one of broadcast, groupcast and unicast as indicated by upper layers;
- if HARQ feedback has been enabled for the MAC PDU according to the logical channel prioritization procedure, the MAC entity sets the HARQ feedback enabled/disabled indicator to enabled.
- if HARQ feedback has been disabled for the MAC PDU according to the logical channel prioritization procedure, the MAC entity sets the HARQ feedback enabled/disabled indicator to disabled;
- the MAC entity sets the priority to the value of the highest priority of the logical channel(s), and a MAC CE, if included, in the MAC PDU;
- if both a group size and a member ID are provided by upper layers and the group size is not greater than the number of candidate PSFCH resources associated with this sidelink grant, the MAC entity selects either positive-negative acknowledgement or negative-only acknowledgement. Otherwise, the MAC entity selects negative-only acknowledgement;
- if negative-only acknowledgement is selected, UE's location information is available, and sl-TransRange has been configured for a logical channel in the MAC PDU, and sl-ZoneConfig is configured as specified in TS 38.331, the MAC entity is configured as follows. It sets the communication range requirement to the value of the longest communication range of the logical channel(s) in the MAC PDU, determines the value of sl-ZoneLength corresponding to the communication range requirement, and sets Zone_id to the value of Zone_id calculated using the determined value. It designates the value of sl-ZoneLength specified in TS 38.331, and performs a new transmission of the MAC PDU on PSSCH using sidelink grant;
- the TX UE monitors PSFCH, and determines a positive or negative acknowledgment for the MAC PDU based on the PSFCH transmission performed by the RX UE;
- if the TX UE determines the negative acknowledgment and the sidelink grant of the selected sidelink grants is available for retransmission, the MAC entity performs retransmission of the MAC PDU on PSSCH using the sidelink grant.

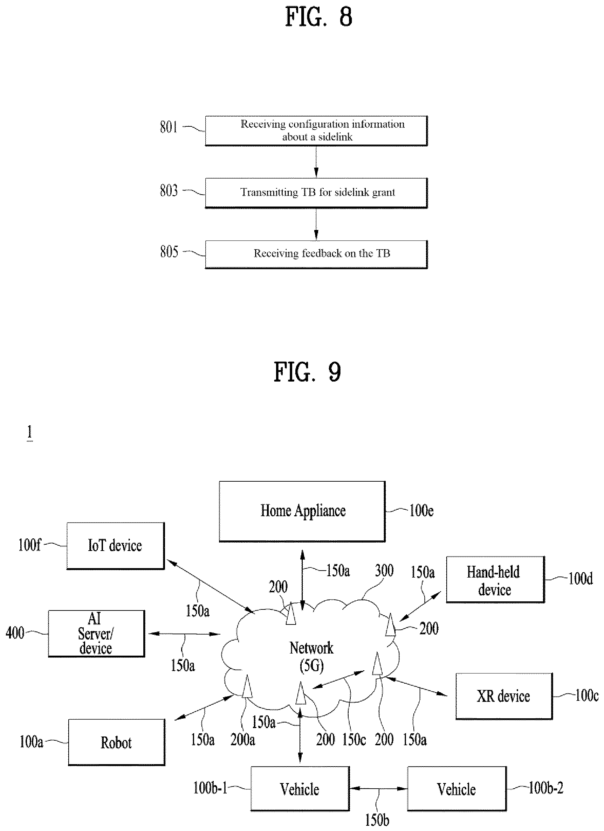

FIG. 8 is a diagram illustrating a method of transmitting and receiving signals by a UE according to an embodiment of the present disclosure.
The LTE receives from the BS configuration information about a resource pool for sidelink transmission (801). The configuration information includes sidelink control information.
Specifically, the resource pool includes a first resource pool with a physical sidelink feedback channel (PSFCH) configured for hybrid automatic repeat and request (HARQ) feedback or a second resource pool without the PSFCH configured.
The UE selects a sidelink grant for the transport block (TB) transmission from the resource pool.
The UE transmits the TB for the selected sidelink grant to a second UE based on the configuration information (803). The TB may be generated based on whether HARQ feedback is enabled.

Based on that the PSFCH is configured for resources of the selected sidelink grant and that the TB has the HARQ feedback enabled, a minimum time gap between two consecutive transmissions of the TB is set.

The first TB includes the sidelink data of a logical channel on which the HARQ feedback is enabled.

When the PSFCH is not configured for the resources of the selected sidelink grant or the minimum time gap cannot be met, the TB includes the sidelink data of the logical channel with the HARQ feedback disabled.

The minimum time gap Z is the sum of a and b, wherein a is the time gap between the end of the last symbol of the PSFCH transmission of a first resource and the start of the first symbol of the corresponding PSFCH reception, determined based on parameters related to the resource pool, and wherein b is the time required to receive and process the PSFCH plus preparation for the sidelink retransmission, including the time for multiplexing and transmit/receive switching of the required physical channel.

The LTE may include monitoring the PSFCH and receiving feedback on the TB from the second UE based on the TB having the HARQ feedback enabled (805).

Alternatively, the UE may retransmit the TB based on the feedback on the TB being HARQ NACK (not-acknowledgement).

Alternatively, the LTE may generate a new TB for the selected sidelink grant based on the feedback on the TB being HARQ ACK (acknowledgment).

In the above description and in FIGS. 7 and 8, the sidelink transmission, grant and resources may be replaced by uplink transmission, grant and resources.

Effects according to the present disclosure

According to the present disclosure, in particular, when a UE autonomously determines a new transmission or retransmission of up to N transmissions of a TB in a resource pool and performs a HARQ retransmission based on HARQ feedback, the UE performing the HARQ transmission may reserve resources for the HARQ transmission and generate a transport block by ensuring a minimum time gap required for the HARQ transmission of the transport block according to the present disclosure.

FIG. 9 illustrates a communication system 1 applied to the present disclosure.

Referring to FIG. 9, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

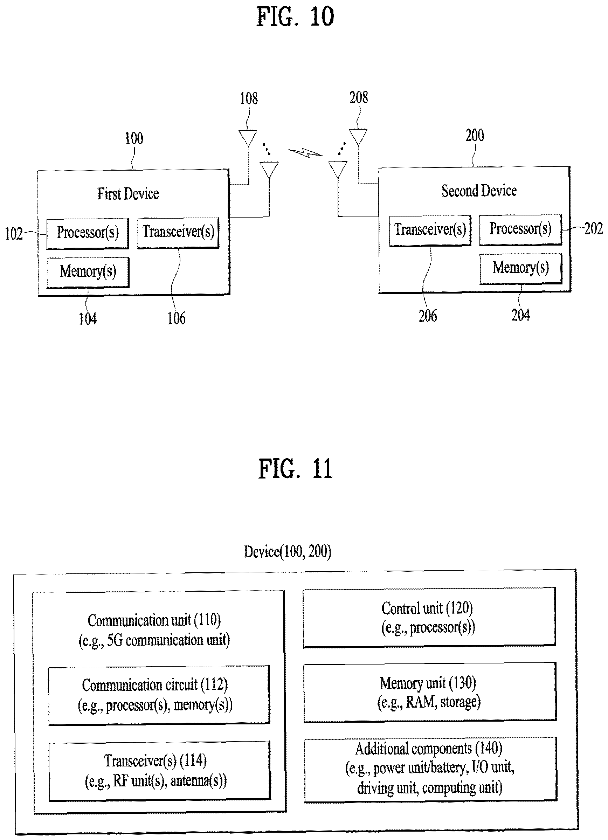

FIG. 10 illustrates wireless devices applicable to the present disclosure.

Referring to FIG. 10, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 9.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 11 illustrates another example of a wireless device applied to the present disclosure. The wireless device may be implemented in various forms according to a use-case/service (refer to FIG. 9).

Referring to FIG. 11, wireless devices 100 and 200 may correspond to the wireless devices 100 and 200 of FIG. 10 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 10. For example, the transceiver(s) 114 may include the one or more transceivers 106 and 206 and/or the one or more antennas 108 and 208 of FIG. 10. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 9), the vehicles (100b-1 and 100b-2 of FIG. 9), the XR device (100c of FIG. 9), the hand-held device (100d of FIG. 9), the home appliance (100e of FIG. 9), the IoT device (100f of FIG. 9), a digital broadcast terminal, a hologram device, a public safety device, an MTC device, a medicine device, a fintech device (or a finance device), a security device, a climate/environment device, the AI server/device (400 of FIG. 9), the BSs (200 of FIG. 9), a network node, etc. The wireless device may be used in a mobile or fixed place according to a use-example/service.

In FIG. 11, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

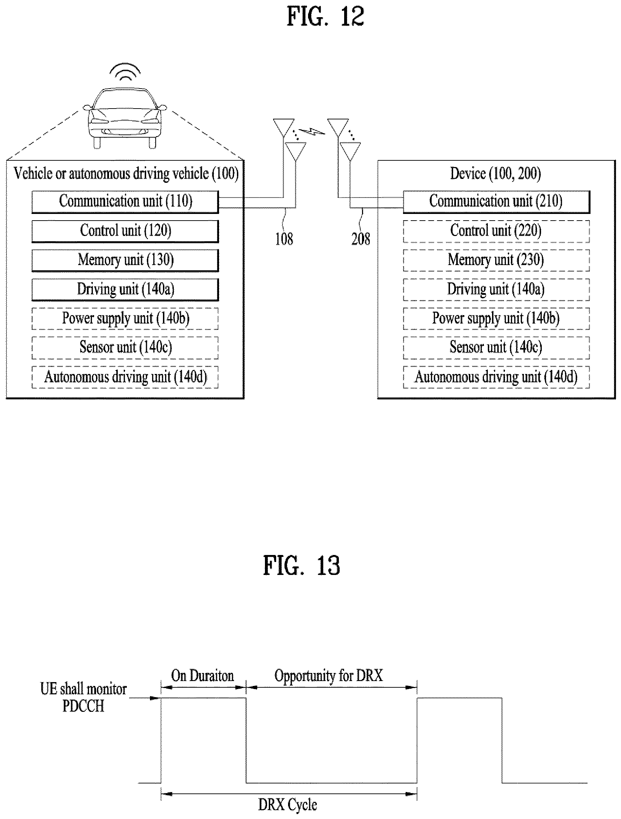

FIG. 12 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 12, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 11, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

FIG. 13 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 13, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in the present disclosure. Irrespective of whether DRX is configured, PDCCH monitoring may be restricted during a time period configured as a measurement gap.

Table 12 describes a DRX operation of a UE (in the RRC_CONNECTED state). Referring to Table 12, DRX configuration information is received by higher-layer signaling (e.g., RRC signaling), and DRX ON/OFF is controlled by a DRX command from the MAC layer. Once DRX is configured, the LTE may perform PDCCH monitoring discontinuously in performing the afore-described/proposed procedures and/or methods.

[Table 12]

|  | Type of signals | UE procedure |
|---|---|---|
| 1st step | RRC signalling (MAC-CellGroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.

- Value of drx-OnDurationTimer: defines the duration of the starting period of the DRX cycle.
- Value of drx-InactivityTimer: defines the duration of a time period during which the UE is awake after a PDCCH occasion in which a PDCCH indicating initial LTL or DL data has been detected.
- Value of drx-HARQ-RTT-TimerDL: defines the duration of a maximum time period until a DL retransmission is received after reception of a DL initial transmission.
- Value of drx-HARQ-RTT-TimerDL: defines the duration of a maximum time period until a grant for a LTL retransmission is received after reception of a grant for a LTL initial transmission.
- drx-LongCycleStartOffset: defines the duration and starting time of a DRX cycle.
- drx-ShortCycle (optional): defines the duration of a short DRX cycle.

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state

The embodiments described above are those in which elements and features of the present disclosure are combined in a predetermined form. Each component or feature should be considered optional unless explicitly stated otherwise. Each component or feature may be implemented in a form that is not combined with other components or features. It is also possible to configure embodiments of the present disclosure by combining some components and/or features. The order of operations described in embodiments of the present disclosure may be changed. Some features or features of one embodiment may be included in another embodiment, or may be replaced with corresponding features or features of another embodiment. It is obvious that claims that are not explicitly cited in the claims can be combined to form an embodiment or included as a new claim by amendment after filing.

It is apparent to those skilled in the art that the present disclosure may be embodied in other specific forms without departing from the characteristics of the present disclosure. Accordingly, the above detailed description should not be construed as restrictive in all respects but as exemplary. The scope of the present disclosure should be determined by a reasonable interpretation of the appended claims, and all modifications within the equivalent scope of the present disclosure are included in the scope of the present disclosure.

[Industrial Applicability]

The present disclosure may be used in a terminal, a base station, or other equipment of a wireless mobile communication system.

**Claims**

1. A method for transmitting and receiving data by a first terminal in a wireless communication system, the method comprising:

   receiving configuration information on resource pools for sidelink transmission from a base station; and
   transmitting, based on the configuration information, a transport block (TB) for a sidelink grant to a second terminal,
   wherein the resource pools comprise a first resource pool with a physical sidelink feedback channel (PSFCH) configured for hybrid automatic repeat and request (HARQ) feedback or a second resource pool without the PSFCH configured,
   wherein the TB is generated based on whether the HARQ feedback is enabled.

2. The method of claim 1, further comprising:

   selecting a sidelink grant for transmission of the TB from the resource pool,
   wherein the TB is transmitted on a resource of the selected sidelink grant.

3. The method of claim 2, wherein, based on that the PSFCH is configured for the resource of the selected sidelink grant and that the TB has the HARQ feedback enabled, a minimum time gap is set between two consecutive transmissions of the TB,
   wherein the TB contains sidelink data of a logical channel having the HARQ feedback enabled.

4. The method of claim 3, wherein, when the PSFCH is not configured for the resource of the selected sidelink grant, or when the minimum time gap is not achievable, the TB contains sidelink data of a logical channel having the HARQ feedback disabled.

5. The method of claim 3, wherein the minimum time gap Z is a sum of a and b,

   wherein the a is a time gap between an end of a last symbol of a PSFCH transmission of a first resource and a start of a first symbol of a corresponding PSFCH reception, determined based on parameters related to the resource pool, and
   wherein the b is a time required for the PSFCH reception and processing plus preparation for a sidelink retransmission including a time for multiplexing and transmission/reception switching of a required physical channel.

6. The method of claim 3, further comprising:

   monitoring the PSFCH based on the TB having the HARQ feedback enabled; and
   receiving feedback on the TB from the second terminal.

7. The method of claim 5, further comprising:

   retransmitting the TB based on the feedback being HARQ not-acknowledgement (NACK); and
   generating a new TB for the sidelink grant based on the feedback being HARQ acknowledgment (ACK).

8. A processor-readable recording medium having recorded thereon instructions for performing the method of claim 1.

9. A device for controlling a terminal for wireless communication, the device comprising:

   a memory having instructions recorded thereon; and
   a processor configured to operate by executing the instructions,
   wherein the operation of the processor comprises:

   receiving configuration information on resource pools for sidelink transmission from a base station; and
   transmitting, based on the configuration information, a transport block (TB) for a sidelink grant to a second terminal,
   wherein the resource pools comprise a first resource pool with a physical sidelink feedback channel (PSFCH) configured for hybrid automatic repeat and request (HARQ) feedback or a second resource pool without the PSFCH configured,
wherein the TB is generated based on whether the HARQ feedback is enabled.

10. A terminal for wireless communication, comprising:

a transceiver; and
one or more processors,
wherein the one or more processors are configured to:

receive configuration information on resource pools for sidelink transmission from a base station; and
transmit, based on the configuration information, a transport block (TB) for a sidelink grant to a second terminal,
wherein the resource pools comprise a first resource pool with a physical sidelink feedback channel (PSFCH) configured for hybrid automatic repeat and request (HARQ) feedback or a second resource pool without the PSFCH configured,
wherein the TB is generated based on whether the HARQ feedback is enabled.

11. A method for transmitting and receiving data by a second terminal in a wireless communication system, the method comprising:

receiving, from a first terminal, a transport block (TB) for a sidelink grant based on configuration information,
wherein the configuration information comprises resource pools for sidelink transmission configured by a base station,
wherein the resource pools comprise a first resource pool with a physical sidelink feedback channel (PSFCH) configured for hybrid automatic repeat and request (HARQ) feedback or a second resource pool without the PSFCH configured,
wherein the TB is generated based on whether the HARQ feedback is enabled.

12. The method of claim 11, wherein the TB is transmitted on a resource of a sidelink grant selected by the first terminal.

13. The method of claim 12, wherein, based on that the PSFCH is configured for the resource of the selected sidelink grant and that the TB has the HARQ feedback enabled, a minimum time gap is set between two consecutive transmissions of the TB,
wherein the TB contains sidelink data of a logical channel having the HARQ feedback enabled.

14. The method of claim 12, wherein, when the PSFCH is not configured for the resource of the selected sidelink grant, or when a minimum time gap is not achievable, the TB contains sidelink data of a logical channel having the HARQ feedback disabled.

15. A second terminal for wireless communication, comprising:

a transceiver; and
one or more processors,
wherein the one or more processors are configured to receive, from a first terminal, a transport block (TB) for a sidelink grant based on configuration information,
wherein the configuration information comprises resource pools for sidelink transmission configured by a base station,
wherein the resource pools comprise a first resource pool with a physical sidelink feedback channel (PSFCH) configured for hybrid automatic repeat and request (HARQ) feedback or a second resource pool without the PSFCH configured,
wherein the TB is generated based on whether the HARQ feedback is enabled.

# FIG. 1

Initial Cell Search | System Information Reception | Random Access Procedure | General DL/UL Tx/Rx S18

PSS/SSS & [DLRS] & PBCH | PDCCH/ PDSCH (BCCH) | PRACH | PDCCH/ PDSCH | PUSCH | PDCCH/ PDSCH | PDCCH/ PDSCH | PUSCH/ PUCCH

S11    S12    S13    S14    S15    S16    S17    · DL/UL ACK/NACK
                                                · UE CQI/PMI/Rank Report
                                                  using PUSCH and PUCCH

EP 4 287 739 A1

# FIG. 2

FIG. 3

# FIG. 4

# FIG. 5

# FIG. 6A

# FIG. 6B

Msg. 2 : RA response

Msg. 4 : RRC connection setup

BS

No response

No response

. . .

Power Ramping

Power Ramping

. . .

UE

Msg. 1

Msg. 3 :
RRC connecion Request

RRC connectecd

EP 4 287 739 A1

# FIG. 7

| RX UE | | TX UE | | Base Station |
|---|---|---|---|---|

System Information
(Resource pool configuration with PSFCH)

TX resource (re-)selection check

Trigger TX resource (re-)selection up to N
retransmissions with HARQ feedback

Create a selected sidelink grant

Create new MAC PDU for a sidelink grant
of the selected sidelink grant

Sidelink transmission of MAC PDU
on a (re-)selected resource

SL NACK on PSFCH

⋮

Sidelink retransmission of MAC PDU
on a (re-)selected resource

SL ACK on PSFCH

Create new MAC PDU for a sidelink grant
of the selected sidelink grant

Sidelink transmission of MAC PDU
on a (re-)selected resource

SL NACK on PSFCH

⋮

Sidelink retransmission of MAC PDU
on a (re-)selected resource

SL ACK on PSFCH

# FIG. 8

801 — Receiving configuration information about a sidelink

803 — Transmitting TB for sidelink grant

805 — Receiving feedback on the TB

# FIG. 9

1

100f — IoT device

Home Appliance — 100e

400 — AI Server/ device

100a — Robot

Network (5G)

150a  300  150a

200

Hand-held device — 100d

200

XR device — 100c

150a

150a

150a

150a  200a

150a  200  150c  200  150a

100b-1 — Vehicle ↔ Vehicle — 100b-2

150b

# FIG. 10

108        208

100                         200

| First Device | | Second Device | |
|---|---|---|---|
| Processor(s) | Transceiver(s) | Transceiver(s) | Processor(s) |
| Memory(s) | | | Memory(s) |

102                                  -202

104      106                 206      204

# FIG. 11

Device(100, 200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 12

| Vehicle or autonomous driving vehicle (100) |
| --- |
| Communication unit (110) |
| Control unit (120) |
| Memory unit (130) |
| Driving unit (140a) |
| Power supply unit (140b) |
| Sensor unit (140c) |
| Autonomous driving unit (140d) |

108        208

| Device (100, 200) |
| --- |
| Communication unit (210) |
| Control unit (220) |
| Memory unit (230) |
| Driving unit (140a) |
| Power supply unit (140b) |
| Sensor unit (140c) |
| Autonomous driving unit (140d) |

# FIG. 13

On Duraiton    Opportunity for DRX

UE shall monitor
PDCCH

DRX Cycle

## INTERNATIONAL SEARCH REPORT

| International application No. |
|---|
| **PCT/KR2022/001488** |

| | |
|---|---|
| **A. CLASSIFICATION OF SUBJECT MATTER** | |
| **H04W 72/04**(2009.01)i; **H04W 72/14**(2009.01)i; **H04W 72/02**(2009.01)i; **H04L 5/00**(2006.01)i; **H04L 1/18**(2006.01)i | |
| According to International Patent Classification (IPC) or to both national classification and IPC | |

| **B. FIELDS SEARCHED** |
|---|
| Minimum documentation searched (classification system followed by classification symbols) |
| H04W 72/04(2009.01); H04L 1/18(2006.01); H04W 72/02(2009.01) |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (KIPO internal) & keywords: 사이드링크 자원 풀(sidelink resource pool), 그랜트(grant), HARQ 피드백 활성화 (Enable HARQ Feedback), PSFCH(Physical Sidelink Feedback Channel), TB(transport block) |

| **C. DOCUMENTS CONSIDERED TO BE RELEVANT** | | |
|---|---|---|
| Category* | Citation of document, with indication, where appropriate, of the relevant passages | Relevant to claim No. |
| Y | KR 10-2021-0005514 A (ASUSTEK COMPUTER INCORPORATION) 14 January 2021 (2021-01-14)<br>See paragraphs [0302]-[0417]; and claim 1. | 1-2,8-12,14-15 |
| A | | 3-7,13 |
| Y | ZTE et al. Discussion on NR V2X remaining MAC issue. R2-2002565, 3GPP TSG-RAN WG2 #109bis-e. Online. 10 April 2020.<br>See sections 2.1.2, 2.2.2 and 2.5-2.6. | 1-2,8-12,14-15 |
| A | VIVO. Remaining issues on mode 1 resource allocation mechanism. R1-2001660, 3GPP TSG RAN WG1 #100bis, e-Meeting. 10 April 2020.<br>See sections 2-2.5. | 1-15 |
| A | SHARP. Remaining issues on resource allocation for NR sidelink. R1-2101533, 3GPP TSG RAN WG1 Meeting #104-e, e-Meeting. 19 January 2020.<br>See section 2.1.2. | 1-15 |
| A | WO 2021-002713 A1 (SAMSUNG ELECTRONICS CO., LTD.) 07 January 2021 (2021-01-07)<br>See paragraphs [0094]-[0099]; and claim 1. | 1-15 |

| ☐ Further documents are listed in the continuation of Box C. | ☑ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **13 May 2022** | **16 May 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2022/001488**

| Patent document cited in search report | | | Publication date (day/month/year) | Patent family member(s) | | | Publication date (day/month/year) |
|---|---|---|---|---|---|---|---|
| KR | 10-2021-0005514 | A | 14 January 2021 | CN | 112187417 | A | 05 January 2021 |
| | | | | EP | 3761546 | A1 | 06 January 2021 |
| | | | | JP | 2021-013158 | A | 04 February 2021 |
| | | | | US | 11057870 | B2 | 06 July 2021 |
| | | | | US | 2021-0007096 | A1 | 07 January 2021 |
| WO | 2021-002713 | A1 | 07 January 2021 | CN | 114342307 | A | 12 April 2022 |
| | | | | EP | 3987863 | A1 | 27 April 2022 |
| | | | | US | 2021-0007081 | A1 | 07 January 2021 |

Form PCT/ISA/210 (patent family annex) (July 2019)